# EUROPEAN PATENT APPLICATION

(11) **EP 4 760 498 A1**
(43) Date of publication of application: **17.06.2026**
(21) Application number: 24916709.9
(22) Date of filing: 20.12.2024
(51) Int. Cl.: G06F 9/451

(54) **DISPLAY METHOD AND APPARATUS**

(30) Priority: 10.01.2024 CN 202410047208
(71) Applicant: Honor Device Co., Ltd., Shenzhen, Guangdong 518040 (CN)
(72) Inventor: HE, Zhuangjie, Shenzhen, Guangdong 518040 (CN); BAO, Xiaojun, Shenzhen, Guangdong 518040 (CN); GU, Pingping, Shenzhen, Guangdong 518040 (CN); JIAO, Junting, Shenzhen, Guangdong 518040 (CN)
(74) Representative: Gill Jennings & Every LLP
(86) International application number: PCT/CN2024/141194
(87) International publication number: WO 2025/148662

(57) **Abstract**

Embodiments of this application provide a display method and apparatus, and relate to the field of terminal technologies. The method includes: displaying a first interface, where the first interface includes a first card set and a first button; in response to a first operation for the first button, displaying a second button on the first interface, and not displaying the first card set and the first button, where a display region occupied by the second button is smaller than a display region occupied by the first card set; and in response to a second operation for the second button, displaying the first card set and the first button on the first interface, and not displaying the second button. In this way, an electronic device can collapse the first card set into the second button based on the first operation. Because the display region occupied by the second button is smaller than the display region occupied by the first card set, an effect of reducing display region occupation on a home screen is implemented by collapsing the card set.

## Description

This application claims priority to Chinese Patent Application No. 202410047208.2, filed with the China National Intellectual Property Administration on January 10, 2024 and entitled "DISPLAY METHOD AND APPARATUS", which is incorporated herein by reference in its entirety.

### TECHNICAL FIELD

This application relates to the field of terminal technologies, and in particular, to a display method and apparatus.

### BACKGROUND

With popularization and development of the Internet, terminal devices become a part of people's work and life. However, as increasing services are provided in a terminal device, content that needs to be displayed on a home screen gradually increases. The home screen may display one or more of the following: for example, an application icon, an application card, or a card set.

Generally, when an electronic device receives a card pushed by a system service, the card may be displayed at an uppermost layer of a card set. A plurality of cards pushed by a system service may be stacked in a card set.

However, the foregoing display method occupies a relatively large display region of the home screen.

### SUMMARY

Embodiments of this application provide a display method and apparatus, which are applied to the field of terminal technologies, and can implement an effect of reducing display region occupation on a home screen.

According to a first aspect, an embodiment of this application provides a display method. The method includes: displaying a first interface, where the first interface includes a first card set and a first button, the first card set includes N cards, a card displayed at an uppermost layer of the N cards is a first card, and N is an integer greater than 0; in response to a first operation for the first button, displaying a second button on the first interface, and not displaying the first card set and the first button, where a display region occupied by the second button is smaller than a display region occupied by the first card set; and in response to a second operation for the second button, displaying the first card set and the first button on the first interface, and not displaying the second button.

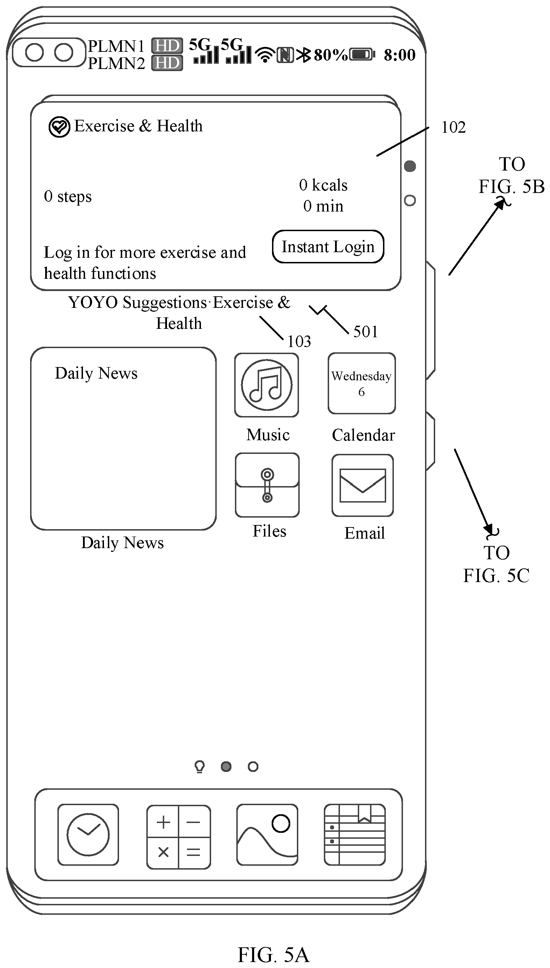

The first interface may be an interface shown in FIG. 5A, the first button may be a first target button depicted in FIG. 5A to FIG. 5E, the first card may be a card 102, and the first operation may be a trigger operation for the first target button.

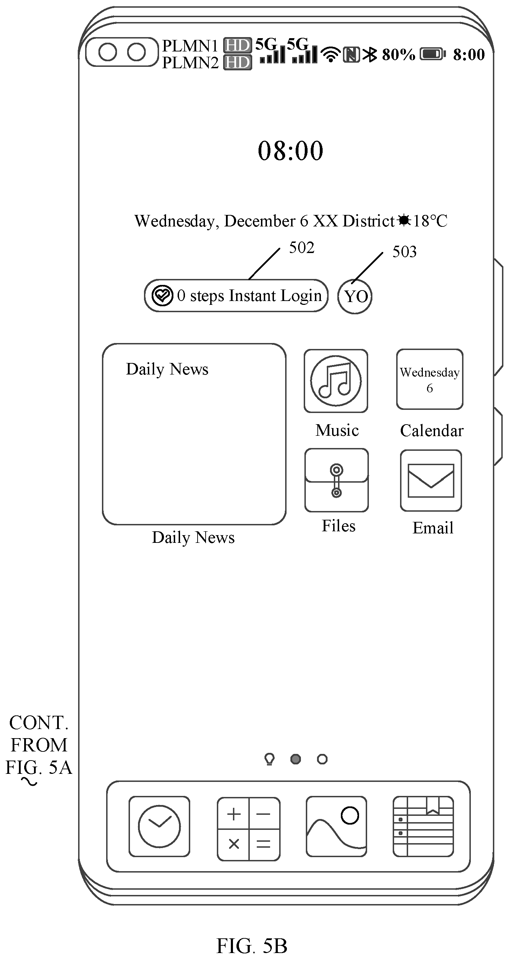

As illustrated on an interface shown in FIG. 5B, the second button may be a capsule button 502, and the second operation may be a trigger operation for the capsule button 502.

It can be understood that, an electronic device may collapse the first card set into the second button based on the first operation. Because the display region occupied by the second button is smaller than the display region occupied by the first card set, an effect of reducing display region occupation on the home screen is implemented by collapsing the card set.

Further, the electronic device may also expand the second button into the first card set based on the second operation, so that a user can flexibly view card content by means of simple triggering.

In a possible implementation, a card, of the N cards, at a lower layer of the first card is a second card, and the displaying a second button on the first interface includes: displaying the second button and a third button on the first interface. The second button includes an identifier of the first card, the third button includes an identifier of the second card, and a display region occupied by the third button is smaller than the display region occupied by the second button.

When a card set includes two cards, the electronic device may collapse the two cards into two buttons: a large button and a small button, so as to reduce display space occupation on the home screen.

In a possible implementation, the method further includes: in response to a third operation for the third button, displaying the first button on the first interface, and displaying the second card in the first card set; and in response to a fourth operation for the first button, displaying the second button and the third button on the first interface, and not displaying the first card set and the first button.

Based on this, the electronic device not only can collapse a card set into a button, but also can display a corresponding card in the card set based on an operation performed by a user to expand the button, so that the user can conveniently view card content at any time.

In a possible implementation, the method further includes: in response to a fifth operation for the third button, displaying the first button on the first interface, and displaying the second card in the first card set; in response to an operation for the second card, displaying the first interface; in response to a sixth operation for the first card set, displaying the first button on the first interface, and displaying the second card in the first card set; and in response to a seventh operation for the first button, displaying a fourth button and a fifth button on the first interface, where a display region occupied by the fifth button is smaller than a display region occupied by the fourth button, the display region occupied by the fourth button is smaller than the display region occupied by the first card set, the fourth button includes the identifier of the second card, and the fifth button includes the identifier of the first card.

Based on this, when a user views a card 104 and, by means of a trigger operation for the card set, views the card 104 again, the electronic device may display a capsule corresponding to the card 104 upon collapsing the card set. In this way, the electronic device can identify a card that a user switches back and forth or views a plurality of times as a relatively important card, and collapse the card into a capsule.

In a possible implementation, the first card is a card pushed by a first service, the second card is a card pushed by a second service, and the displaying the second button and a third button on the first interface includes: displaying the second button and the third button on the first interface when a priority of the first service is higher than a priority of the second service.

The electronic device may determine, based on a priority of a service (or a priority of a card), content to be displayed in a button. For example, a service card with a high priority is displayed in a button that occupies a large display region, and a service card with a low priority is displayed in a button that occupies a small display region.

In a possible implementation, the displaying a second button on the first interface includes: displaying the second button and first information on the first interface, where the first information includes one or more of the following: weather information, time information, or regional information.

The electronic device may also display the first information while displaying the button, so that a user can view more other information while collapsing the card set.

In a possible implementation, after the displaying a first interface, the method further includes: in response to an eighth operation for the first card set; displaying a first window on the first interface, where the first window includes a sixth button for setting a display style; and in response to an operation for the sixth button, displaying a second window on the first interface, where the second window includes a seventh button for setting a first display style, and the first display style is a style of Climate Clock + a service capsule; and the displaying the second button and first information on the first interface includes: displaying the second button and the first information on the first interface when the seventh button is selected.

Based on this, the electronic device can support setting of the first display style and switching between the first display style and a card style, so that a user conveniently selects a proper display style as required.

In a possible implementation, the method further includes: in response to a received third card, displaying the first button on the first interface, and displaying the third card in the first card set; in response to a ninth operation for the first button, displaying an eighth button and a ninth button on the first interface, and not displaying the first card set and the first button, where the eighth button includes an identifier of the third card, the ninth button includes the identifier of the first card and the identifier of the second card, a display region occupied by the eighth button is smaller than the display region occupied by the first card set, and the display region occupied by the eighth button is larger than a display region occupied by the ninth button; and in response to an operation for the ninth button, displaying the first card or the second card in the first card set.

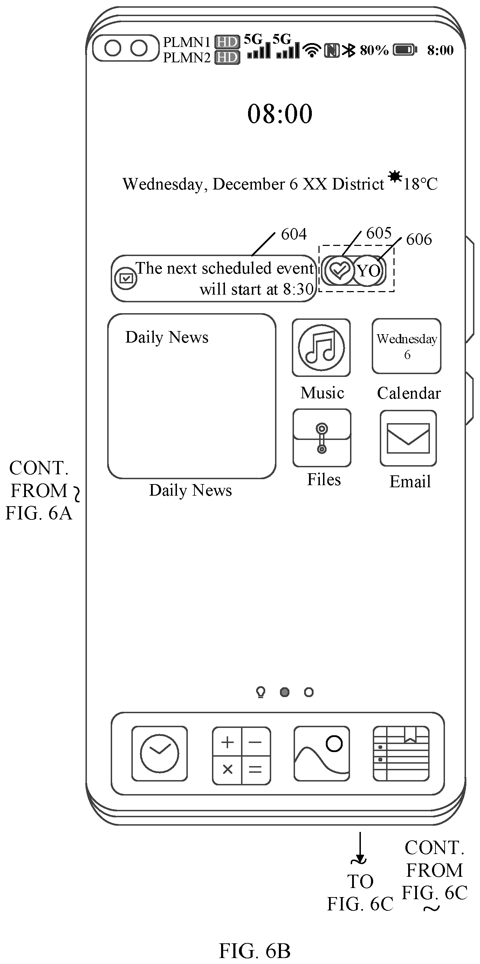

As illustrated on an interface shown in FIG. 6B, the eighth button may be a button 604, and the ninth button may be a button (or referred to as a small button) formed by a ball 605 and a ball 606.

Based on this, when a card set includes three cards, the electronic device may collapse the three cards into two buttons: a large button and a small button, and the small button may include identifiers of two cards, so as to reduce display space occupation on the home screen.

In a possible implementation, after the response to the received third card, the method further includes: in response to a received fourth card, displaying the first button on the first interface, and displaying the fourth card in the first card set; in response to a tenth operation for the first button, displaying a tenth button and an eleventh button on the first interface, and not displaying the first card set and the first button, where the tenth button includes an identifier of the fourth card, the eleventh button displays a first identifier and a second identifier, the second identifier includes two of the identifier of the first card, the identifier of the second card, and the identifier of the third card, a display region occupied by the tenth button is smaller than the display region occupied by the first card set, and a display region occupied by the eleventh button is smaller than the display region occupied by the tenth button; and in response to an operation for the eleventh button, displaying the first card, the second card, or the third card in the first card set.

Based on this, when a card set includes four cards, the electronic device may collapse the four cards into two buttons: a large button and a small button, and the small button may include identifiers of two cards and one ellipsis-dots identifier, so as to reduce display space occupation on the home screen.

In a possible implementation, the first identifier is used to indicate that the electronic device receives at least M cards, and M is greater than or equal to 4.

In a possible implementation, the method further includes: in response to a fifth card and a sixth card that are simultaneously received, displaying the first button on the first interface, and simultaneously displaying the fifth card and the sixth card in the first card set; and in response to an eleventh operation for the first button, displaying a twelfth button and a thirteenth button on the first interface, and not displaying the first card set and the first button, where a display region occupied by the twelfth button is smaller than the display region occupied by the first card set, the display region occupied by the twelfth button is larger than a display region occupied by the thirteenth button, the twelfth button includes an identifier of the fifth card, and the thirteenth button includes an identifier of the sixth card.

Based on this, when the electronic device simultaneously pushes two cards, the electronic device may also collapse the two cards, so as to save home screen space.

In a possible implementation, the fifth card is a card pushed by a third service, the sixth card is a card pushed by a fourth service, and the displaying a twelfth button and a thirteenth button on the first interface includes: displaying the twelfth button and the thirteenth button on the first interface when a priority of the third service is higher than a priority of the fourth service.

When the electronic device simultaneously receives two cards, the electronic device may also determine, based on a priority upon collapsing the cards, content to be displayed in a collapsed button. For example, content of a card with a higher priority is displayed in a large button, so that a user can conveniently view the content at any time.

In a possible implementation, the method further includes: in response to a twelfth operation for the first card set, displaying a second interface, where the second interface includes the first card and the second card.

The twelfth operation for the first card set may be understood as a long slide operation for the first card set. The long slide operation may be understood as an operation with a slide distance greater than a distance threshold.

Based on this, due to a size limitation of the electronic device, the electronic device may display all cards in a card set on the second interface after receiving a long slide operation of a user, thereby improving efficiency of viewing the cards by the user.

In a possible implementation, after the displaying a first interface, the method further includes: when duration of displaying a third interface reaches a first time threshold, displaying the second button on the first interface, and not displaying the first card set and the first button, where the third interface is an interface different from the first interface.

Based on this, the electronic device may switch from the card style to the capsule style after exiting, for duration of 15 seconds or the like, a screen on which a card set is located. This prevents the card set from occupying a display region for a long time.

In a possible implementation, after the displaying a second button on the first interface, the method further includes: in response to an operation of deleting the first card in the first card set, not displaying the second button.

Based on this, the electronic device may cancel display of a button after all cards in a card set are deleted, so as to maintain consistency between the card set and the button.

In a possible implementation, the first interface further includes a second card set, and the method further includes: in response to a fifth card and a sixth card that are simultaneously received, displaying a fourteenth button and a fifteenth button on the first interface, displaying the fifth card in the first card set, and displaying the sixth card in the second card set, where the display region occupied by the first card set is larger than a display region occupied by the second card set; and in response to an operation for the fourteenth button or the fifteenth button, displaying a sixteenth button and a seventeenth button on the first interface, and not displaying the first card set, the second card set, the fourteenth button, and the fifteenth button, where a display region occupied by the sixteenth button is smaller than the display region occupied by the first card set, the display region occupied by the sixteenth button is larger than a display region occupied by the seventeenth button, the sixteenth button includes an identifier of the fifth card, and the seventeenth button includes an identifier of the sixth card.

When the electronic device includes a plurality of card sets, the electronic device may also collapse two card sets into buttons based on an operation for any card, and display an identifier of a larger card set in a button that occupies a larger display region, so that a user can conveniently view a card status at any time.

According to a second aspect, an embodiment of this application provides a display apparatus. The display apparatus may be an electronic device, or may be a chip or a chip system in the electronic device. The display apparatus may include a display unit and a processing unit. When the display apparatus is an electronic device, the display unit herein may be a display screen. The display unit is configured to perform a step of displaying, to enable the electronic device to implement the display method according to any one of the first aspect or the possible implementations of the first aspect. When the display apparatus is an electronic device, the processing unit may be a processor. The display apparatus may further include a storage unit, and the storage unit may be a memory. The storage unit is configured to store instructions, and the processing unit executes the instructions stored in the storage unit, so that the electronic device is enabled to implement the display method according to any one of the first aspect or the possible implementations of the first aspect. When the display apparatus is a chip or a chip system in an electronic device, the processing unit may be a processor. The processing unit executes the instructions stored in the storage unit, so that the electronic device is enabled to implement the display method according to any one of the first aspect or the possible implementations of the first aspect. The storage unit may be a storage unit (for example, a register or a cache) in the chip or a storage unit (for example, a read-only memory or a random access memory) that is in the electronic device and that is located outside the chip.

Specifically, an embodiment of this application provides a display apparatus. The display apparatus includes a processing unit and a display unit. The display unit is configured to display a first interface, where the first interface includes a first card set and a first button, the first card set includes N cards, a card displayed at an uppermost layer of the N cards is a first card, and N is an integer greater than 0; in response to a first operation for the first button, the display unit is configured to display a second button on the first interface, and the processing unit is configured to not display the first card set and the first button, where a display region occupied by the second button is smaller than a display region occupied by the first card set; and in response to a second operation for the second button, the display unit is configured to display the first card set and the first button on the first interface, and the processing unit is configured to not display the second button.

According to a third aspect, an embodiment of this application provides an electronic device. The electronic device includes one or more processors and a memory. The memory is coupled to the one or more processors. The memory is configured to store computer program code. The computer program code includes computer instructions. The one or more processors invoke the computer instructions to enable the electronic device to perform the method according to any one of the first aspect or the possible implementations of the first aspect.

According to a fourth aspect, an embodiment of this application provides a computer-readable storage medium. The computer-readable storage medium includes computer instructions. When the computer instructions are run on an electronic device, the electronic device is enabled to perform the method according to any one of the first aspect or the possible implementations of the first aspect.

According to a fifth aspect, an embodiment of this application provides a computer program product including a computer program. When the computer program product includes computer program code. When the computer program code is run on an electronic device, the electronic device is enabled to perform the method according to any one of the first aspect or the possible implementations of the first aspect.

According to a sixth aspect, this application provides a chip system. The chip system is applied to an electronic device. The chip system includes one or more processors, and the one or more processors are configured to invoke computer instructions, so that the electronic device is enabled to perform the method according to any one of the first aspect or the possible implementations of the first aspect.

In a possible implementation, the chip system described above in this application further includes at least one memory, and the at least one memory stores instructions. The memory may be a storage unit, for example, a register or a cache, inside the chip system, or may be a storage unit (for example, a read-only memory or a random access memory) of the chip system.

It should be understood that technical solutions of the second aspect to the sixth aspect of this application correspond to those of the first aspect of this application, and beneficial effects achieved in these aspects and corresponding feasible implementations are similar. Details are not described again.

### BRIEF DESCRIPTION OF DRAWINGS

FIG. 1A and FIG. 1B are a schematic diagram of a scenario according to an embodiment of this application;
FIG. 2 is a schematic diagram of a hardware structure of an electronic device according to an embodiment of this application;
FIG. 3A to FIG. 3D are a schematic diagram of interfaces for enabling a capsule style according to an embodiment of this application;
FIG. 4 is a schematic diagram of a capsule style according to an embodiment of this application;
FIG. 5A to FIG. 5E are a schematic diagram 1 of interfaces for display style switching according to an embodiment of this application;
FIG. 6A to FIG. 6D are a schematic diagram 2 of interfaces for display style switching according to an embodiment of this application;
FIG. 7A to FIG. 7C are a schematic diagram 3 of interfaces for display style switching according to an embodiment of this application;
FIG. 8A and FIG. 8B are a schematic diagram 4 of interfaces for display style switching according to an embodiment of this application;
FIG. 9A to FIG. 9C are a schematic diagram 5 of interfaces for display style switching according to an embodiment of this application;
FIG. 10A to FIG. 10C are a schematic diagram 6 of interfaces for display style switching according to an embodiment of this application;
FIG. 11A to FIG. 11D are a schematic diagram of interfaces for restoring an application according to an embodiment of this application;
FIG. 12 is a schematic diagram of steps of a display method according to an embodiment of this application;
FIG. 13 is a schematic diagram of a structure of a display apparatus according to an embodiment of this application; and
FIG. 14 is a schematic diagram of a hardware structure of another electronic device according to an embodiment of this application.

### DESCRIPTION OF EMBODIMENTS

To clearly describe the technical solutions in the embodiments of this application, the following briefly describes some terms and technologies in the embodiments of this application.

### 1. YOYO Suggestions

YOYO Suggestions may be a function that identifies a user intent and recommends a corresponding service.

For example, when a user arrives at a place such as an airport or a high-speed railway station, YOYO Suggestions may push a card with information about a ticket check-in gate, so that the user can quickly find the ticket check-in gate. Alternatively, when a user has set a plurality of meeting events, YOYO Suggestions may push a card with meeting prompt information before any meeting starts, so as to prevent the user from missing a meeting or the like.

Generally, YOYO Suggestions may provide service recommendations in a plurality of scenarios such as flights, subways, express deliveries, driving, exercise & health, and schedule reminders.

An electronic device may display a card in YOYO Suggestions in a card set manner or the like. A card set may be specified in a leftmost home screen, a home screen, a lock screen interface, or the like of the electronic device. This is not limited in the embodiments of this application.

YOYO Suggestions is only an illustrative function that can actively recommend services. In different devices, YOYO Suggestions may alternatively have another name. This is not limited in the embodiments of this application.

### 2. Card set

The card set may be understood as a container for storing N cards, where N is an integer greater than 0.

The card set may display one card at a time. For example, when an electronic device receives a new card pushed by a service, the electronic device may display the new card at an uppermost layer of the card set.

The card set may display two cards at a time. For example, when the electronic device receives two cards simultaneously pushed by two services, the electronic device may simultaneously display the two cards at an uppermost layer of the card set.

It can be understood that when the electronic device is a small-screen device such as a small-screen mobile phone or a watch, the electronic device may display a card set on a home screen. When the electronic device is a large-screen device such as a foldable-screen mobile phone or a tablet, the electronic device may display two card sets on the home screen. This is not limited in the embodiments of this application.

### 3. Other terms

In the embodiments of this application, words such as "first" and "second" are used to distinguish between same items or similar items with basically same functions and effects. For example, a first chip and a second chip are merely used to distinguish between different chips, and are not intended to limit a sequence of the first chip and the second chip. A person skilled in the art can understand that the words such as "first" and "second" do not limit a quantity or an execution sequence, and the words such as "first" and "second" do not define a definite difference.

It should be noted that the words such as "example" or "for example" in the embodiments of this application are used to indicate an example, an illustration, or a description. Any embodiment or design solution described as an "example" or "for example" in this application should not be construed as being preferred or advantageous over other embodiments or design solutions. Exactly, use of the words such as "example" or "for example" is intended to present related concepts in a specific manner.

In the embodiments of this application, "at least one" means one or more, and "a plurality of' means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression means any combination of these items, including any combination of a single item or a plurality of items. For example, at least one of a, b, or c may represent a, b, c, a and b, a and c, b and c, or a, b, and c, where a, b, and c may be singular or plural.

### 4. Electronic device

The electronic device in the embodiments of this application may include a handheld device with a display function, an onboard device, or the like. For example, some electronic devices may be: a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, and the like. This is not limited in the embodiments of this application.

The electronic device may also be a wearable device, such as glasses, gloves, a watch, clothing, or shoes.

The electronic device in the embodiments of this application may also be referred to as a terminal device, user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

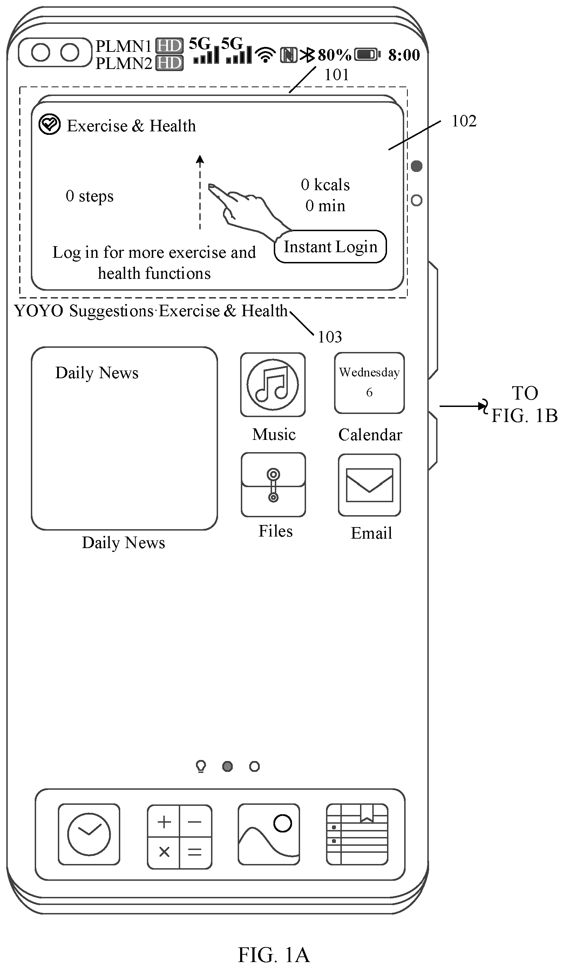

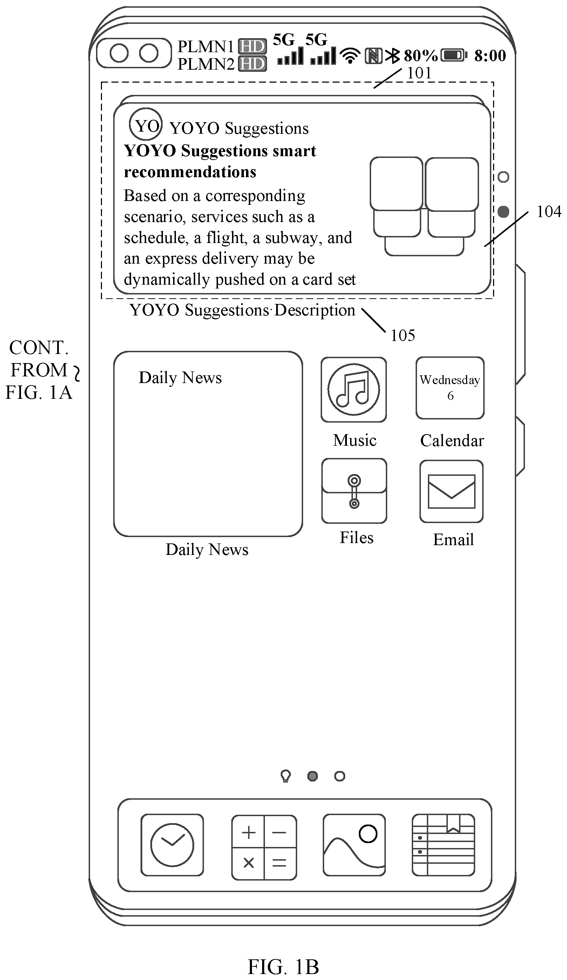

With reference to a scenario shown in FIG. 1A and FIG. 1B, the following provides an illustrative description of viewing a card set corresponding to YOYO Suggestions. The illustration does not constitute a limitation on the embodiments of this application.

For example, FIG. 1 A and FIG. 1B are a schematic diagram of a scenario according to an embodiment of this application. In the embodiment corresponding to FIG. 1 A and FIG. 1B, a mobile phone is used as an example of an electronic device for example description. This example does not constitute a limitation on this embodiment of this application.

The electronic device displays an interface shown in FIG. 1A. The interface may be referred to as a home screen interface. The home screen interface may display one or more of the following: a card set 101 (for example, a region indicated by a dashed-line box), an application icon, or the like. The application icon may include one or more of the following: a Daily News card, a Music icon, a Calendar icon, a Files icon, an Email icon, a Clock icon, a Calculator icon, an Albums icon, a Notepad icon, or the like.

The card set 101 may include at least two cards, for example, an Exercise & Health card 102 (or referred to as a card 102 for short) displayed in FIG. 1A and a YOYO Suggestions description card 104 (or referred to as a card 104 for short) displayed in FIG. 1B. The card 102 may be a card pushed by an Exercise & Health service, and the card 104 may be a card pushed by YOYO Suggestions. The Exercise & Health service may be one of services supported by YOYO Suggestions.

When the card 102 is displayed in the card set 101, a card name 103 may be: YOYO Suggestions·Exercise & Health. The card 102 may display one or more of the following: an identifier of the Exercise & Health service (or the Exercise & Health card), step count information (for example, 0 steps), exercise time information (0 minutes), information about energy consumed by exercises (0 kilocalories), an instant login button, information used to prompt user login, or the like.

As illustrated on the interface shown in FIG. 1A, in response to an operation performed by a user to slide upward (or downward) in the card 102, the electronic device may display an interface shown in FIG. 1B. The interface shown in FIG. 1B may display the card set 101 (the region indicated by the dashed-line box). For other content displayed on the interface, refer to a description on the interface shown in FIG. 1A. Details are not described herein again.

When the card 104 is displayed in the card set 101, a card name 105 may be displayed as "YOYO Suggestions·Description". The card 104 may display function description information of YOYO Suggestions. The function description information of YOYO Suggestions may be displayed as YOYO Suggestions smart recommendations. Based on a corresponding scenario, services such as a schedule, a flight, a subway, and an express delivery may be dynamically pushed on the card set.

It can be understood that when the card set 101 includes another card, the user may view, by triggering the card set 101, card content pushed by different services.

However, the card set 101 occupies a relatively large display region on a home screen, and this reduces content efficiency of the home screen. In addition, a visual range occupied by the card set is excessively large and less aesthetic.

In view of this, an embodiment of this application provides a display method, so that an electronic device may collapse a card set into a button, and a display region occupied by the button is smaller than a display region occupied by a card, thereby implementing an effect of not occupying a display region on the home screen.

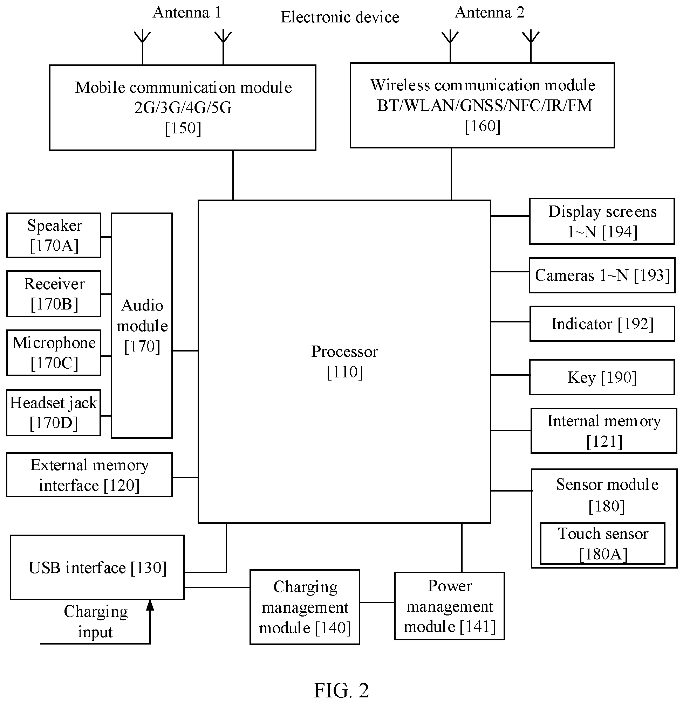

To better understand the embodiments of this application, the following describes a structure of the electronic device in the embodiments of this application. For example, FIG. 2 is a schematic diagram of a hardware structure of an electronic device according to an embodiment of this application.

The electronic device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a key 190, an indicator 192, a camera 193, a display screen 194, and the like.

The sensor module 180 may include one or more of the following: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor (not shown in FIG. 2), or the like. This is not specifically limited in the embodiments of this application.

It can be understood that the structure illustrated in the embodiments of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. Different processing units may be independent devices, or may be integrated into one or more processors. A memory may be further disposed in the processor 110 to store instructions and data. For example, the processor 110 may be configured to implement steps performed in a data processing method provided in the embodiments of this application.

A wireless communication function of the electronic device may be implemented by using the antenna 1, the antenna 2, the mobile communication module 150, the wireless communication module 160, a modem processor, a baseband processor, and the like.

The wireless communication module 160 may provide a wireless communication solution that is applied to the electronic device and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), or the like.

The electronic device implements a display function by using a GPU, the display screen 194, an application processor, or the like. The GPU is a microprocessor for image processing and is connected to the display screen 194 and the application processor. The GPU is configured to perform mathematical and geometric computing for graphics rendering.

The display screen 194 is configured to display an image, a video, or the like, The display screen 194 includes a display panel. In some embodiments, the electronic device may include one or N display screens 194, where N is a positive integer greater than 1. For example, the display screen 194 may be configured to display a card on any interface of the home screen.

The electronic device may implement a shooting function by using an ISP, the camera 193, a video codec, the GPU, the display screen 194, the application processor, or the like.

The external memory interface 120 may be configured to connect to an external memory card, for example, a Micro SD card, to expand a storage capacity of the electronic device. The internal memory 121 may be configured to store computer-executable program code, and the executable program code includes instructions. For example, the internal memory 121 may be configured to store a code program executed in the data processing method.

The electronic device may implement an audio function by using the audio module 170, the speaker 170A, the receiver 170B, the microphone 170C, the headset jack 170D, the application processor, and the like. For example, music playback or audio recording is implemented.

A software system of the electronic device may use a layered architecture, an event-driven architecture, a microkernel architecture, a microservice architecture, a cloud architecture, or the like. Details are not described herein again.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments again.

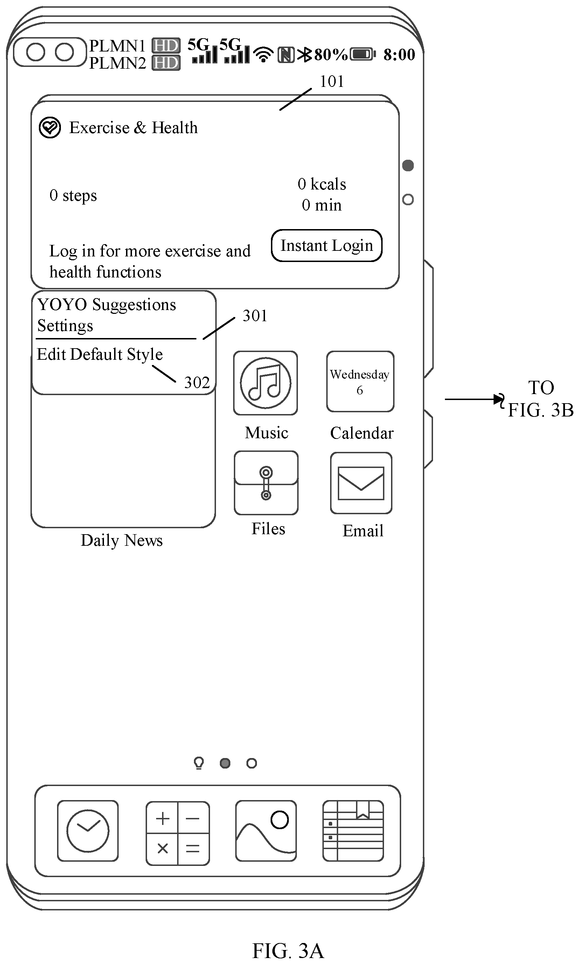

In the embodiments of this application, the electronic device may support display of YOYO Suggestions in a capsule style on the home screen. In addition, the electronic device may support display style switching of YOYO Suggestions between a card style and the capsule style. The card style may include a style of Climate Clock + Exercise & Health and a Climate Clock card style depicted in FIG. 3A to FIG. 3D.

Before the display method provided in this embodiment of this application is described, a process of enabling the capsule style may be described schematically with reference to an embodiment corresponding to FIG. 3A to FIG. 3D.

For example, FIG. 3A to FIG. 3D are a schematic diagram of interfaces for enabling a capsule style according to an embodiment of this application.

In response to a long-press operation of a user for the card set 101 on the interface shown in FIG. 1A, the electronic device displays an interface shown in FIG. 3A. The interface shown in FIG. 3A may include the card set 101 and a setting window 301. The setting window 301 may include a button used to perform settings of YOYO Suggestions and a button 302 used to edit a default style. Other content displayed on the interface shown in FIG. 3A may be similar to content on the interface shown in FIG. 1A. Details are not described herein again.

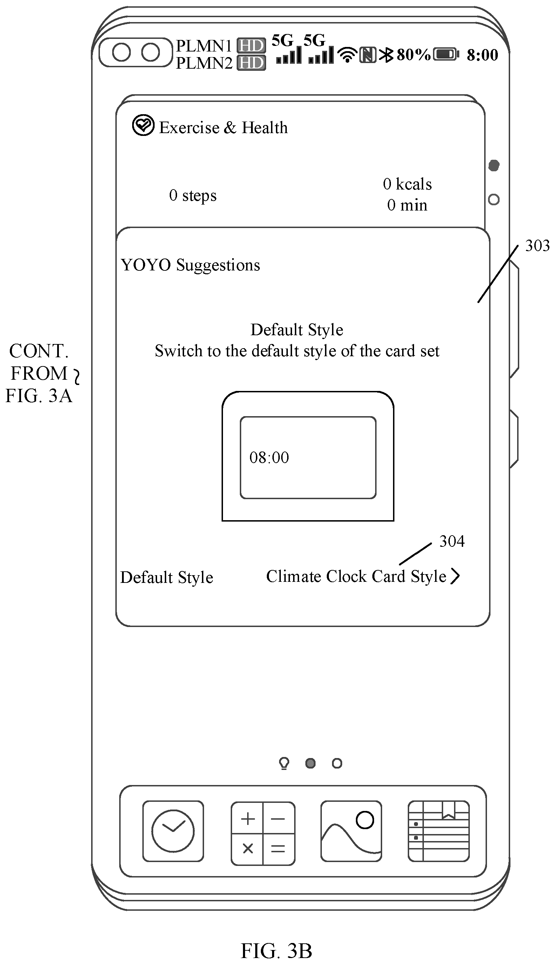

In response to a trigger operation of a user for the button 302, the electronic device displays an interface shown in FIG. 3B. The interface may include a window 303. The window 303 may display one or more of the following: a button 304 used to switch the default style and a description corresponding to a current display style. The current display style may be the Climate Clock card style.

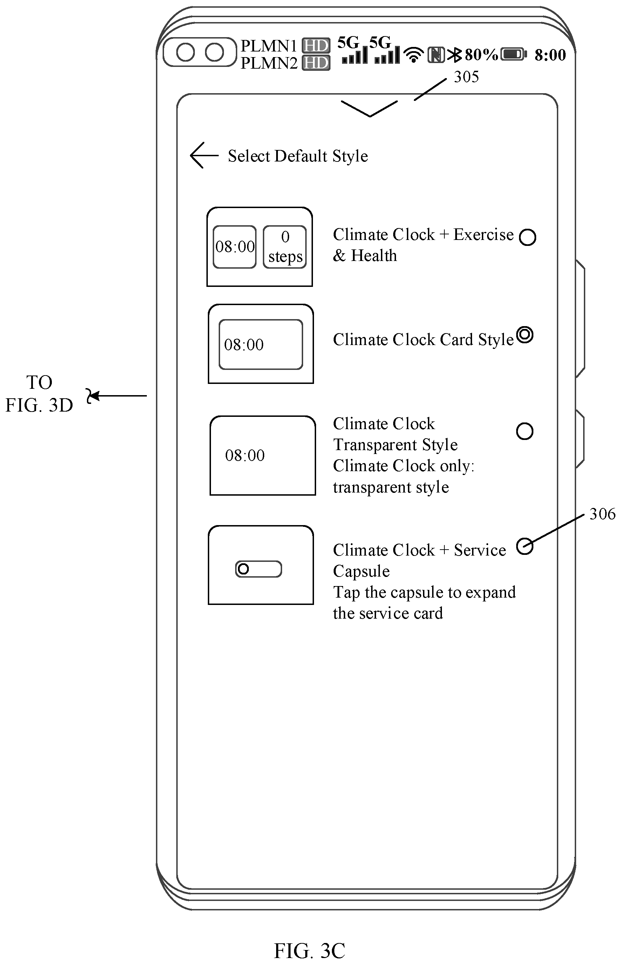

In response to a trigger operation of a user for the button 304, the electronic device displays an interface shown in FIG. 3C. The interface may include a window 305. The window 305 may include at least one display style and a selection button corresponding to the at least one display style, for example, a style of Climate Clock + a service capsule and a button 306. A function description may be displayed around the button 306, that is, a service card may be expanded by tapping the capsule.

It can be understood that when a user selects the button 306, YOYO Suggestions may switch between the card style and the capsule style based on a user operation. In addition, the electronic device may display Climate Clock information while displaying the capsule style. The Climate Clock information may include one or more of the following: weather information, time information, regional information, or the like.

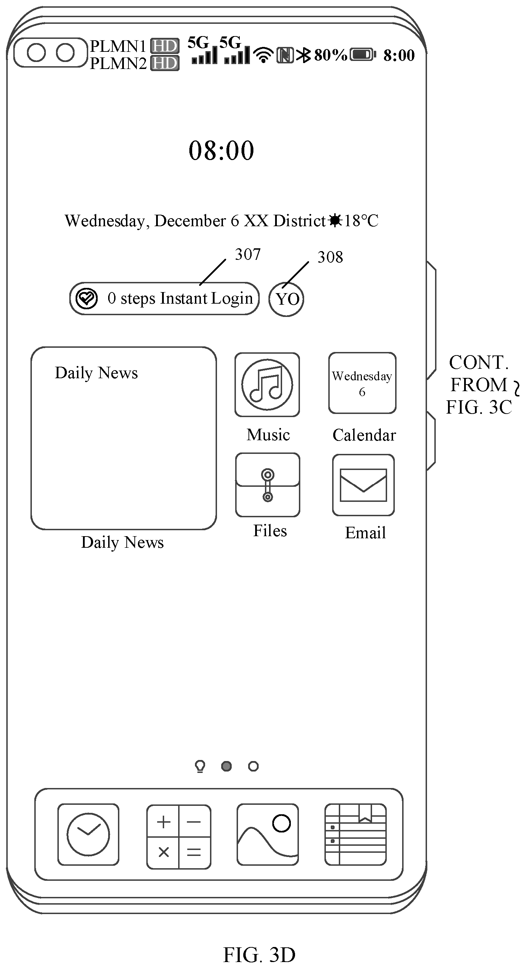

In a possible implementation, the at least one display style may also include the capsule style. The capsule style can implement a function of expanding a service card. For example, after a user selects the capsule style, the electronic device may display a capsule button 307 and a ball button 308 on an interface shown in FIG. 3D, and does not display the Climate Clock information. The capsule style can implement a purpose of occupying a smaller home screen display region.

The window 305 may further include other display styles supported by another YOYO Suggestions, such as the style of Climate Clock + Exercise & Health, the Climate Clock card style, and a Climate Clock transparent style.

In the style of Climate Clock + Exercise & Health, the electronic device may display two cards by default at a position at which the card set 101 is located. The two cards may be respectively a Climate Clock card and an Exercise & Health card.

In the Climate Clock card style, the electronic device may display the Climate Clock card by default at the position at which the card set 101 is located, and the card set 101 may support switching between the Climate Clock card and another card.

In the Climate Clock transparent style, the electronic device may display the Climate Clock information in a transparent state by default at the position at which the card set 101 is located.

In response to a trigger operation of a user for the button 306, the electronic device displays the interface shown in FIG. 3D. The interface may display the capsule button 307, the ball button 308, and the Climate Clock information. The capsule button 307 may display: the identifier of the Exercise & Health card (or the Exercise & Health service) and/or prompt information pushed by the Exercise & Health service. For example, the prompt information may be displayed as "0 steps" and "Instant login". The ball button 308 may display an identifier of the YOYO description card (or YOYO Suggestions).

The Climate Clock information may include one or more of the following: the time information (for example, December 6 or Wednesday), the weather information (18 degrees Celsius or a weather identifier), or the regional information (for example, an XX region). The XX region may be understood as a certain region.

Based on this, the electronic device may support display of YOYO Suggestions in the capsule style. A display region occupied by the capsule button is smaller than a display region of the card set 101, and an effect of reducing display region occupation on the home screen can be implemented, so that the home screen is more streamlined.

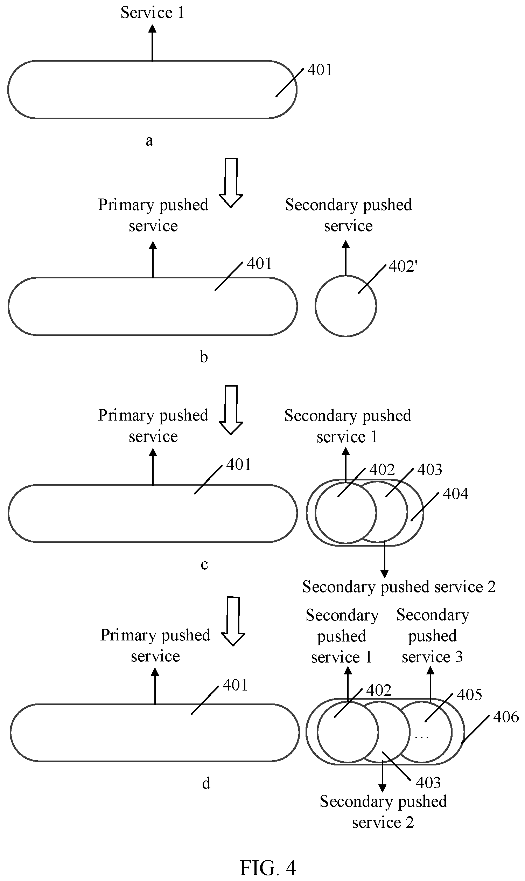

With reference to an embodiment corresponding to FIG. 4, the following provides an example description of capsule styles upon receiving different quantities of cards. FIG. 4 is a schematic diagram of a capsule style according to an embodiment of this application.

As shown in a in FIG. 4, when a card set includes only one card 1, the electronic device may display a capsule button 401 upon collapsing the card set. The capsule button 401 may be understood as a button allowed to be triggered.

The capsule button 401 may correspond to the card 1, and the card 1 may be pushed by a service 1. The capsule button 401 may display an identifier of the service 1 (or the card 1), prompt information corresponding to the card 1, and/or the like. The identifier may be an icon. Because a display region occupied by the capsule button 401 is relatively small, the prompt information corresponding to the card 1 is generally relatively brief.

As shown in b in FIG. 4, when a card set includes only two cards (for example, the card 1 and a card 2), the electronic device may display the capsule button 401 and a ball button 402' upon collapsing the card set. The ball button 402' may be understood as a button allowed to be triggered. A display region occupied by the ball button 402' is smaller than a display region occupied by the capsule button 401.

The capsule button 401 may correspond to the card 1, the ball button 402' may correspond to the card 2, and the card 2 may be pushed by a service 2. The ball button 402' may display an identifier of the service 2 (or the card 2).

The capsule button 401 may correspond to a primary pushed service, and the ball button 402' may correspond to a secondary pushed service. The electronic device may determine, based on a priority of a service (or a card), content to be displayed in a capsule button or a ball button.

For example, when a priority of the service 1 is higher than a priority of the service 2, the electronic device may determine that the service 1 is a primary pushed service and the service 2 is a secondary pushed service, so as to display content corresponding to the service 1 in the capsule button 401 and display the identifier of the card 2 in the ball button 402'.

Alternatively, when the priority of the service 2 is higher than the priority of the service 1, the electronic device may determine that the service 2 is a primary pushed service and the service 1 is a secondary pushed service, so as to display content corresponding to the service 2 in the capsule button 401 and display the identifier of the card 1 in the ball button 402'.

It can be understood that a priority of a service (or a card) may be preset by the electronic device. A priority of a service is the same as a priority of a card. That is, when a service has a high priority, a card pushed by the service also carries an identifier of the high priority.

In a possible implementation, in response to a trigger operation of a user for the ball button 402', the electronic device may expand the card set to display the card 2. In a case that the card 2 is displayed in the card set, when the user switches from the card 2 to the card 1 and then from the card 1 to the card 2, the electronic device collapses the card set. In this case, the electronic device may display the identifier of the card 2 in the capsule button 401 and display the identifier of the card 1 (or the card 2) in the ball button 402'.

It can be understood that a user may switch a card back and forth and collapse the card set to adjust the content to be displayed in the capsule button and the ball button. In this scenario, the electronic device may record an exposure status of a card, and determine, based on the exposure status of the card, the content to be displayed in the capsule button and the ball button.

As shown in c in FIG. 4, when a card set includes only three cards (for example, the card 1, the card 2, and a card 3), the electronic device may display the capsule button 401, a ball 402, and a ball 403. The ball 402 and the ball 403 may jointly serve as a button 404 allowed to be triggered. A display region occupied by the button 404 is smaller than the display region occupied by the capsule button 401.

The capsule button 401 may correspond to the card 1, the ball 402 may correspond to the card 2, the ball 403 may correspond to the card 3, and the card 3 may be pushed by a service 3. The button 404 may include the identifier of the card 2 and an identifier of the service (card) 3.

The capsule button 401 may correspond to a primary pushed service, the ball 402 may correspond to a secondary pushed service 1, and the ball 403 may correspond to a secondary pushed service 2. The electronic device may determine, based on a priority of a service, content to be displayed in a capsule button or a ball. A specific process is similar to that described in b in FIG. 4. Details are not described herein again.

As shown in d in FIG. 4, when a card set includes only four cards (for example, the card 1, the card 2, the card 3, and a card 4), the electronic device may display the capsule button 401, the ball 402, the ball 403, and a ball 405. The ball 402, the ball 403, and the ball 405 may jointly serve as a button 406 that can be triggered. A display region occupied by the button 406 is smaller than the display region occupied by the capsule button 401.

The capsule button 401 may correspond to the card 1, the ball 402 may correspond to the card 2, the ball 403 may correspond to the card 3, and a card 4 may be pushed by a service 4. The button 406 includes the identifier of the card 2, the identifier of the card 3, and an ellipsis-dots identifier.

The capsule button 401 may correspond to a primary pushed service, the ball 402 may correspond to a secondary pushed service 1, the ball 403 may correspond to a secondary pushed service 2, and the ball 405 may correspond to another service (for example, the service 4). The electronic device may determine, based on a priority of a service, content to be displayed in a capsule button or a ball. A specific process is similar to that described in b in FIG. 4. Details are not described herein again.

The ellipsis-dots identifier may be displayed in the ball 405. The ball 405 may also be referred to as a "more" icon, that is, be used to indicate that the electronic device currently receives pushed content of at least M services. M is greater than or equal to 4. This is not limited in this embodiment of this application.

It can be understood that when the electronic device receives pushed content of at least M services, the electronic device may perform display based on the style shown in d in FIG. 4, so as to implement a purpose of reducing display space occupation on the home screen.

It can be understood that the capsule button and the ball depicted in FIG. 4 are merely examples. For example, the capsule button may also be displayed in a rectangular shape or an elliptical shape, and the ball may also be displayed in a triangular shape or a rectangular shape. This is not limited in this embodiment of this application.

Based on this, the electronic device may provide a plurality of capsule styles, so as to implement a purpose of occupying a relatively small display space.

When the capsule style is enabled based on the embodiment corresponding to FIG. 3A to FIG. 3D, the electronic device may implement switching of YOYO Suggestions between the card style and the capsule style based on the following embodiments corresponding to FIG. 5A to FIG. 7C.

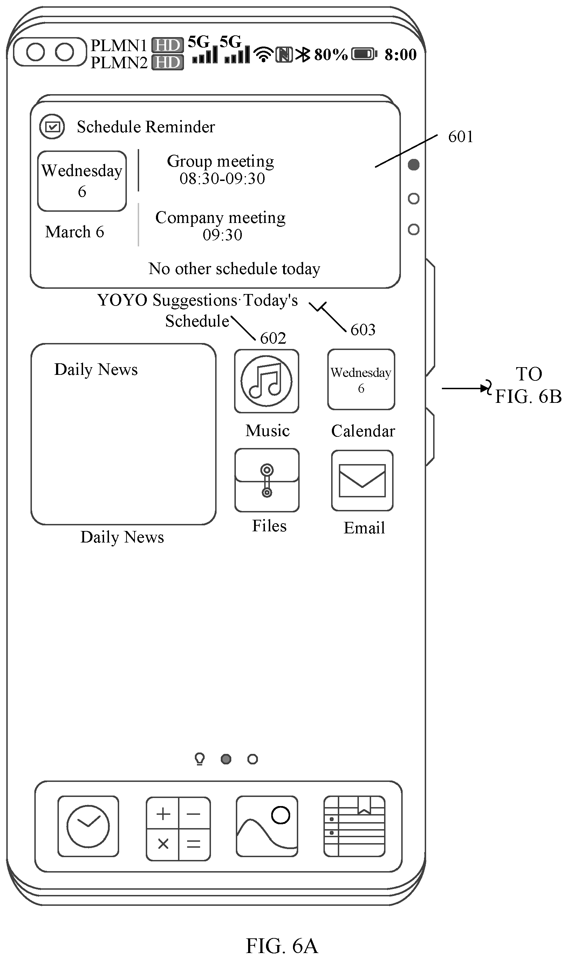

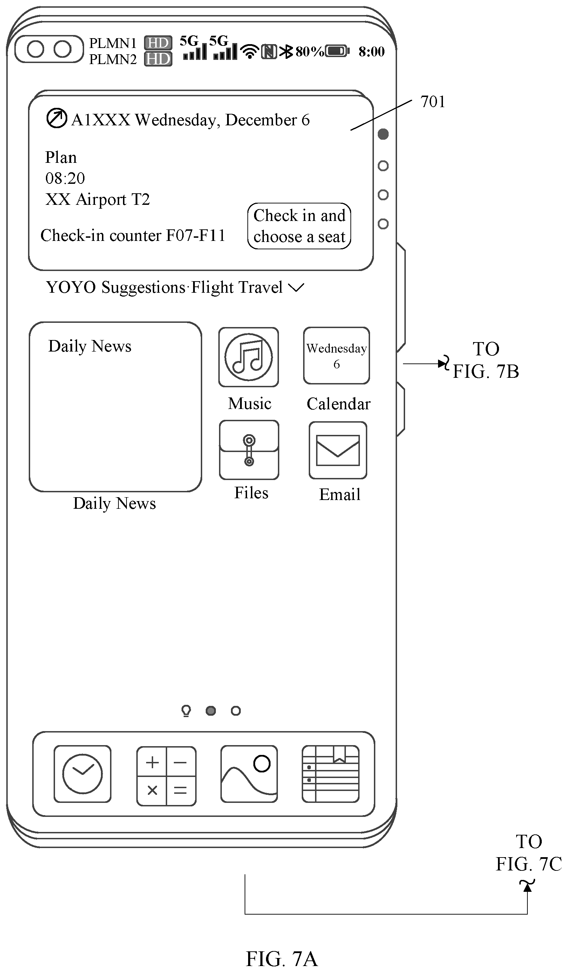

When a card set includes two cards, for a process of display style switching, refer to a description in FIG. 5A to FIG. 5E. When the card set includes three cards, for a process of display style switching, refer to a description in FIG. 6A to FIG. 6D. When the card set includes at least four cards, for a process of display style switching, refer to a description in FIG. 7A to FIG. 7C.

For example, FIG. 5A to FIG. 5E are a schematic diagram 1 of interfaces for display style switching according to an embodiment of this application.

The electronic device displays an interface shown in FIG. 5A. The interface may display the card 102, the card name 103, and an icon 501. For the card 102, the card name 103, and other content displayed on the interface, refer to the description of FIG. 1A. Details are not described herein again.

The icon 501 may be displayed as a downward arrow, and the icon 501 may indicate that the card 102 (or the card set) is allowed to be collapsed. The icon 501 may be displayed around the card 102, for example, on a right side of the card name 103. Alternatively, the icon 501 may be displayed inside the card set. This is not limited in this embodiment of this application.

The icon 501 may serve as a first target button, or the card name 103 may serve as the first target button, or the icon 501 and the card name 103 may jointly serve as the first target button, and the first target button is used to collapse the card 102 (or the card set).

In response to a trigger operation of a user for the first target button, the electronic device displays an interface shown in FIG. 5B. The interface displays a capsule button 502 and a ball button 503. For content displayed on the interface, refer to the interface shown in FIG. 3D. Details are not described herein again.

In a possible implementation, in response to a trigger operation of a user for the capsule button 502, the electronic device may display the interface shown in FIG. 5A. In this way, the electronic device is enabled to implement flexible expansion of the card set based on the trigger operation of the user for the capsule button 502.

When the electronic device displays the interface shown in FIG. 5A, the electronic device may switch from the card style to the capsule style after exiting, for duration of 15 seconds or the like, a screen on which the card set is located. This prevents the card set from occupying a display region for a long time.

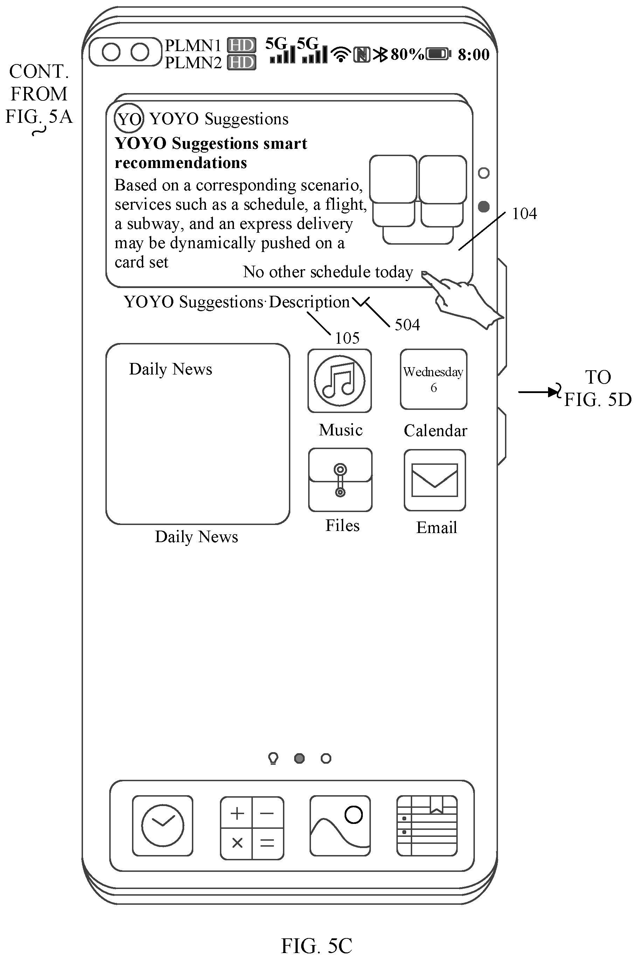

In response to a slide operation of a user for the card 102, the electronic device may display an interface shown in FIG. 5C. The interface may display the card 104, the card name 105, and an icon 504. For the card 104, the card name 105, and other content displayed on the interface, refer to the description of FIG. 1B. Details are not described herein again.

A function of the icon 504 and a display position of the icon 504 may be similar to a position of the icon 501. Details are not described herein again.

The icon 504 may serve as a second target button, or the card name 105 may serve as the second target button, or the icon 504 and the card name 105 may jointly serve as the second target button, and the second target button is used to collapse the card 104 (or the card set).

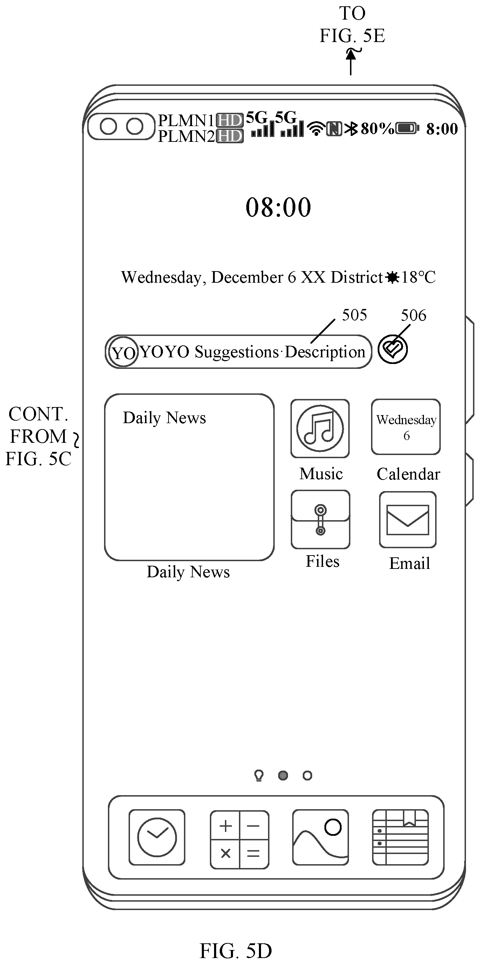

In response to a trigger operation of a user for the second target button, the electronic device displays an interface shown in FIG. 5D. The interface displays a capsule button 505 and a ball button 506.

The capsule button 505 may display an identifier of the YOYO Suggestions description card and prompt information corresponding to the YOYO Suggestions description card. For example, the prompt information may be displayed as a description of YOYO Suggestions. The ball button 506 may display the identifier of the Exercise & Health card.

In a possible implementation, in response to a trigger operation for the ball button 503 on the interface shown in FIG. 5B, the electronic device displays the interface shown in FIG. 5C. Further, in response to a trigger operation of a user for the second target button, the electronic device returns to the interface shown in FIG. 5B.

It can be understood that when the user views the card 104 by triggering the ball button 503 and does not trigger the card 104, the electronic device may resume display of the ball button 503 upon collapsing the card set.

In a possible implementation, in response to a trigger operation of a user for the ball button 503 on the interface shown in FIG. 5B, the electronic device displays the interface shown in FIG. 5C. In response to an operation performed by a user to slide the card 104 on the interface shown in FIG. 5C, the electronic device may display the interface shown in FIG. 5A. In response to an operation performed by a user to slide the card 102 on the interface shown in FIG. 5A, the electronic device may display again the interface shown in FIG. 5C. Further, in response to a trigger operation of a user for the second target button, the electronic device may display the interface shown in FIG. 5D.

It can be understood that when a user views the card 104 and, by means of a trigger operation for the card set, views the card 104 again, the electronic device can display a capsule corresponding to the card 104 upon collapsing the card set. In this way, the electronic device can identify a card that a user switches back and forth or views a plurality of times as a relatively important card, and collapse the card into a capsule.

In a possible implementation, in response to a trigger operation of a user for the capsule button 505, the electronic device may display the interface shown in FIG. 5C. Alternatively, in response to a trigger operation of a user for the ball button 506, the electronic device may display the interface shown in FIG. 5A.

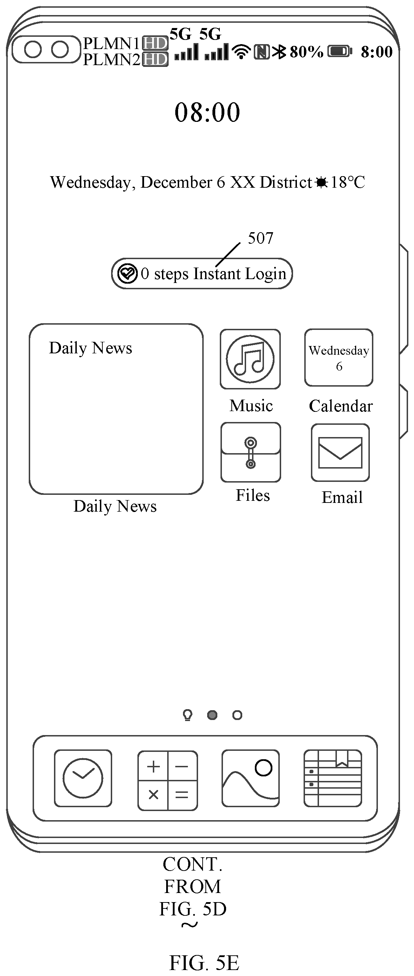

In a possible implementation, a function of the YOYO Suggestions description card is merely used to describe a function of YOYO Suggestions. In addition, when a user is already familiar with YOYO Suggestions, the YOYO Suggestions description card may not be displayed all the time. Therefore, the YOYO Suggestions description card may disappear from the card set after display duration of one week or three times of exposure. Adaptively, the capsule button 505 (or the ball button 503) may disappear after display duration of one week or three times of exposure, and further the electronic device displays an interface shown in FIG. 5E. "Three times of exposure" may be understood as follows: the capsule button 505 (or the ball button 503) is displayed up to three times.

The interface shown in FIG. 5E may include a capsule button 507. Content displayed in the capsule button 507 may be the same as content in the capsule button 502. Details are not described herein again.

Based on this, the electronic device may conveniently collapse a card into a capsule button based on a trigger operation of a user, so as to implement an objective of saving display space on the home screen. Alternatively, based on a trigger operation of a user, a capsule button or a ball button is expanded into a card, so that the user can conveniently view card content at any time.

For example, FIG. 6A to FIG. 6D are a schematic diagram 2 of interfaces for display style switching according to an embodiment of this application.

Based on the embodiment corresponding to FIG. 5A to FIG. 5E, when the electronic device receives a Today's Schedule card pushed by a schedule service, the electronic device may display an interface shown in FIG. 6A. In this scenario, a card set may include three cards, for example, the Today's Schedule card (for example, a card 601 below), the Exercise & Health card, and the YOYO Suggestions description card.

It can be understood that when the electronic device displays the capsule style, in response to receiving a new card pushed by a service, the electronic device may switch from the capsule style to the card style, and display the new card in the card set.

The interface shown in FIG. 6A may display the card 601, a card name 602, and an icon 603. The card 601 may be the Today's Schedule card. The card name 602 may be displayed as YOYO Suggestions·Today's Schedule. A function of the icon 603 and a position of the icon 603 may be similar to the position of the icon 501. Details are not described herein again.

The card 601 may display one or more of the following: information prompting a group meeting at 08:30-09:30, information prompting a company meeting at 09:30, date information, or the like.

In response to a trigger operation of a user for the icon 603 (and/or the card name 602), the electronic device displays the interface shown in FIG. 6B. The interface may include a capsule button 604, a ball 605, and a ball 606. The ball 606 may be partially blocked by the ball 605. The ball 605 and the ball 606 may jointly serve as a button that can be triggered. The button that can be triggered is located inside a dashed-line box.

The capsule button 604 may display an identifier of the card 601 and/or prompt information used to indicate that a next scheduled event will start at 08:30. The trigger operation of the user for the icon 603 (and/or the card name 602) may also be understood as an operation of collapsing the card 601.

As illustrated in c in FIG. 4, the schedule service may be a primary pushed service, and therefore is displayed in the capsule button 604. In this scenario, a priority of the schedule service may be higher than a priority of the Exercise & Health service, and the priority of the schedule service is higher than a priority of the description of YOYO Suggestions, and/or a schedule service card is a card placed at an uppermost layer of the card set. Because the schedule service card is a card most recently received by the electronic device, the schedule service card may be displayed at the uppermost layer of the card set.

In a possible implementation, in response to a trigger operation of a user for the capsule button 604, the electronic device displays the interface shown in FIG. 6A.

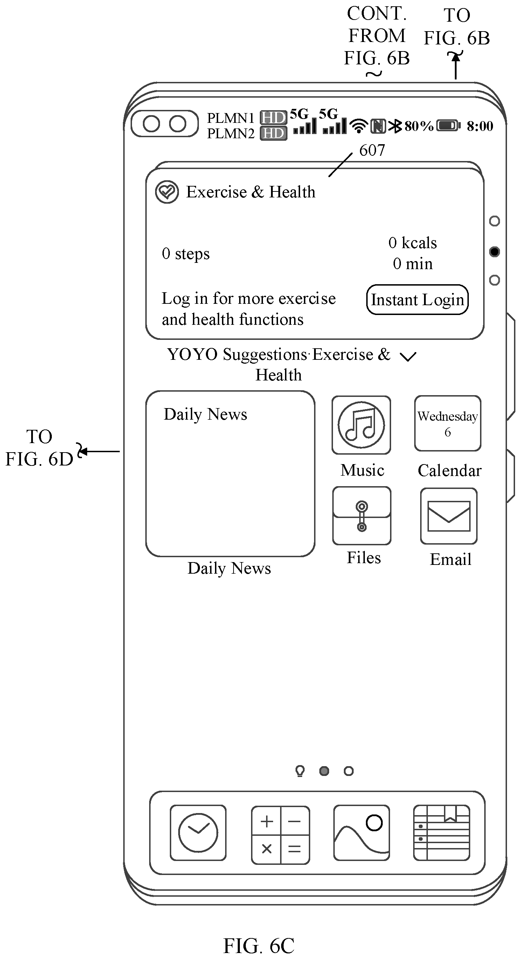

The ball 605 and the ball 606 may be located in a dashed-line box. In response to a trigger operation of a user for the dashed-line box, the electronic device may display an interface shown in FIG. 6C. The interface may display a card 607, and the card 607 corresponds to the ball 605.

It can be understood that when the home screen includes a plurality of balls, in response to a trigger operation of a user for a region in which the plurality of balls are located, the electronic device may expand a card corresponding to the first ball.

In response to an operation performed by a user to collapse the card 607, the electronic device displays the interface shown in FIG. 6C.

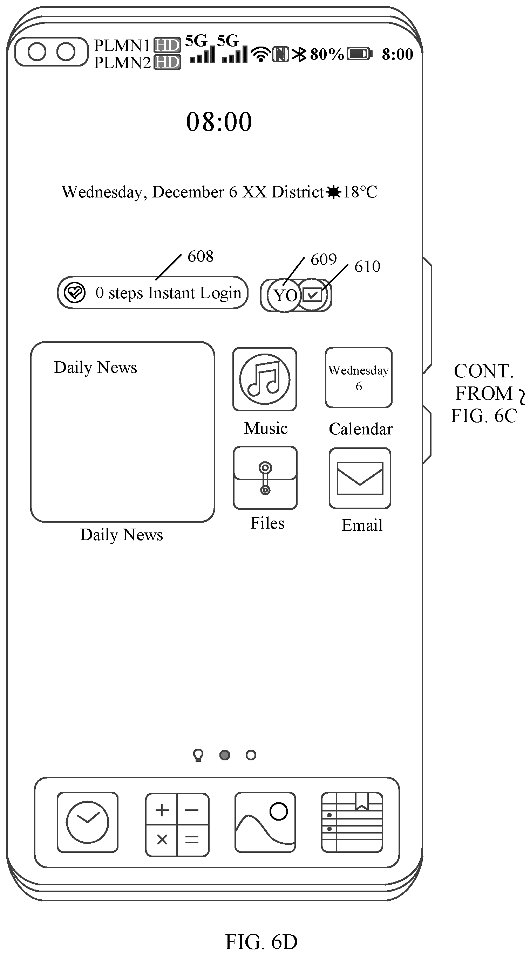

In a possible implementation, in response to an operation performed by a user to slide the card set on the interface shown in FIG. 6C, switch to another card, and then switch back to the card 607, the electronic device may display an interface shown in FIG. 6D. The interface may include a capsule button 608, a ball 609, and a ball 610. The capsule button 608 may correspond to the card 607, and the ball 610 may correspond to the card 601.

Based on this, when a card set includes three cards, the electronic device may display one capsule button and two balls based on priorities of services upon collapsing the card set. Any ball may include an identifier of a card, so that a user can quickly identify which service initiates a push.

In a possible implementation, when a card set includes three or more cards, in response to an operation performed by a user to collapse the card set, the electronic device may also display one capsule button and two balls, and may display an ellipsis-dots identifier inside the last one of the two balls. This is not limited in this embodiment of this application.

For example, FIG. 7A to FIG. 7C are a schematic diagram 3 of interfaces for display style switching according to an embodiment of this application.

Based on FIG. 6A or FIG. 6B, when the electronic device receives a flight travel card pushed by a flight travel service, the electronic device may display an interface shown in FIG. 7A. In this scenario, a card set may include four cards, and the four cards are successively the flight travel card (for example, a card 701 below), the Today's Schedule card, the Exercise & Health card, and the YOYO Suggestions description card.

The interface shown in FIG. 7A may include the card 701. The card 701 may be the flight travel card, and a card name corresponding to the card 701 may be displayed as YOYO Suggestions·Flight Travel.

The card 701 may include flight information and/or a button used to indicate check-in and seat selection. For example, the flight information may include one or more of the following: a plan of take-off at 08:20, XX airport T2, a check-in counter F07-F11, or the like.

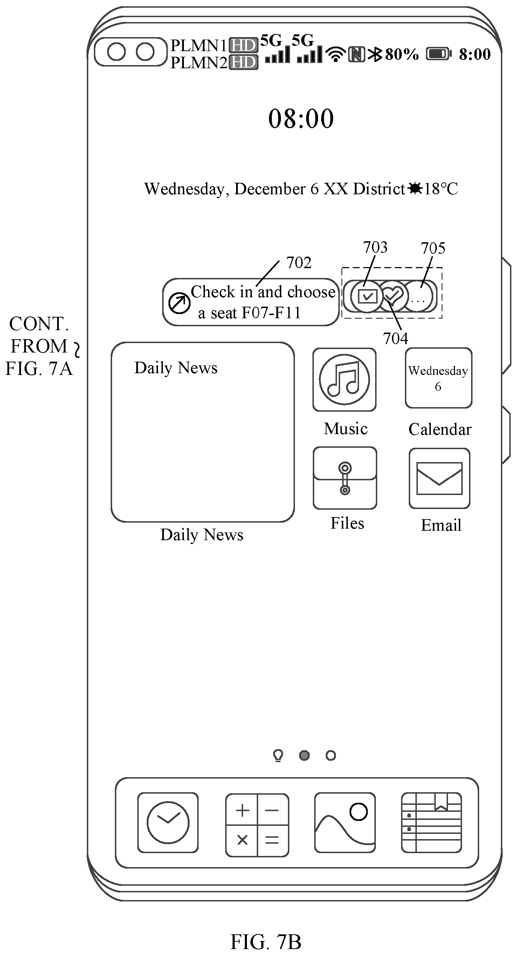

In response to an operation of collapsing the card 701, the electronic device displays an interface shown in FIG. 7B. The interface may include a capsule button 702, a ball 703, a ball 704, and a ball 705. The ball 704 and the ball 705 may be partially blocked. The ball 703, the ball 704, and the ball 705 may jointly serve as a button that can be triggered. The button that can be triggered is located inside a dashed-line box.

The capsule button 702 may display an identifier of the card 701 and/or prompt information used to indicate check-in, seat selection, and F07-F11.

The ball 703 may correspond to the Today's Schedule card, the ball 704 may correspond to the Exercise & Health card, and the ball 705 may correspond to another card in the card set except the card 701, the Today's Schedule card, and the Exercise & Health card. An ellipsis-dots identifier may be displayed in the ball 705.

As illustrated in d in FIG. 4, to reduce space occupation on the home screen, the electronic device may display a maximum of one capsule button and three balls on the home screen, and display the ellipsis-dots identifier inside the last one of the three balls.

In a possible implementation, in response to a trigger operation of a user for the capsule button 704, the electronic device displays the interface shown in FIG. 7A.

It can be understood that the ball 703, the ball 704, and the ball 705 are located in a dashed-line box. In response to a trigger operation of a user for the dashed-line box, the electronic device may expand card content corresponding to the ball 703. Further, when the user needs to view card content corresponding to the ball 705, the user may slide the card content corresponding to the ball 703 upward or downward.

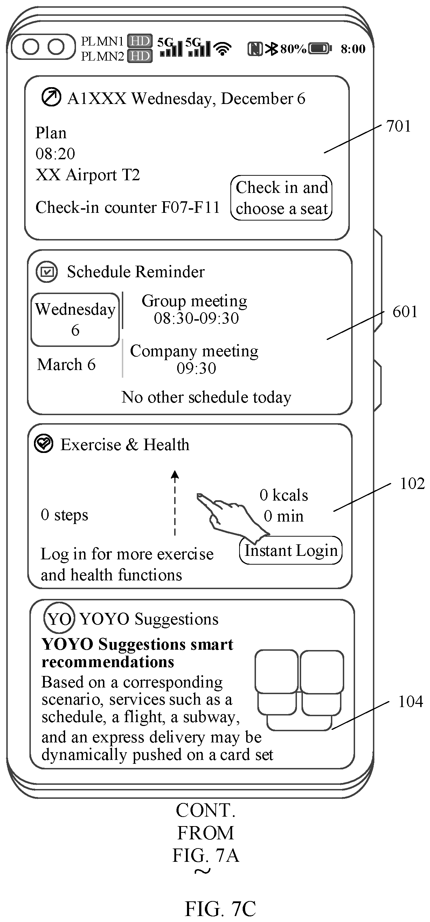

In a possible implementation, in response to a long slide operation of a user for the card 701, the electronic device displays an interface shown in FIG. 7C. The interface may display a plurality of cards in a card set. The interface shown in FIG. 7C may include the card 701, the card 601, the card 102, and the card 104.

The long slide operation may be understood as an operation with a slide distance greater than a distance threshold. The long slide operation may include a slide upward operation and a slide downward operation. For example, when a slide distance is greater than the distance threshold, the electronic device may expand all cards in the card set. Alternatively, when a slide distance is less than or equal to the distance threshold, the electronic device may view another card in the card set except the card 701. In this way, a user can conveniently view a plurality of cards in the card set at any time.

It can be understood that, due to a size limitation of the electronic device, after receiving a long slide operation of a user, the electronic device may display a maximum of four cards on an interface shown in FIG. 7C. In addition, the user may view another card in the card set by performing a slide upward or downward operation on the interface shown in FIG. 7C.

Based on this, when a card set includes four or more cards, the electronic device may display, based on a priority of a service, one capsule button and three balls upon collapsing the card set, and may display an ellipsis-dots identifier inside the last one of the three balls, so as to implement a purpose of saving space on the home screen.

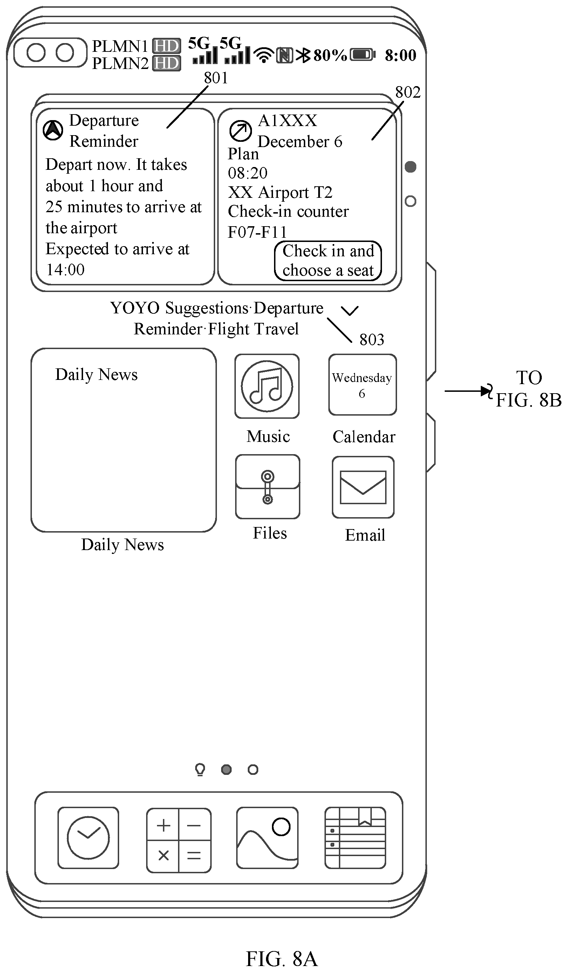

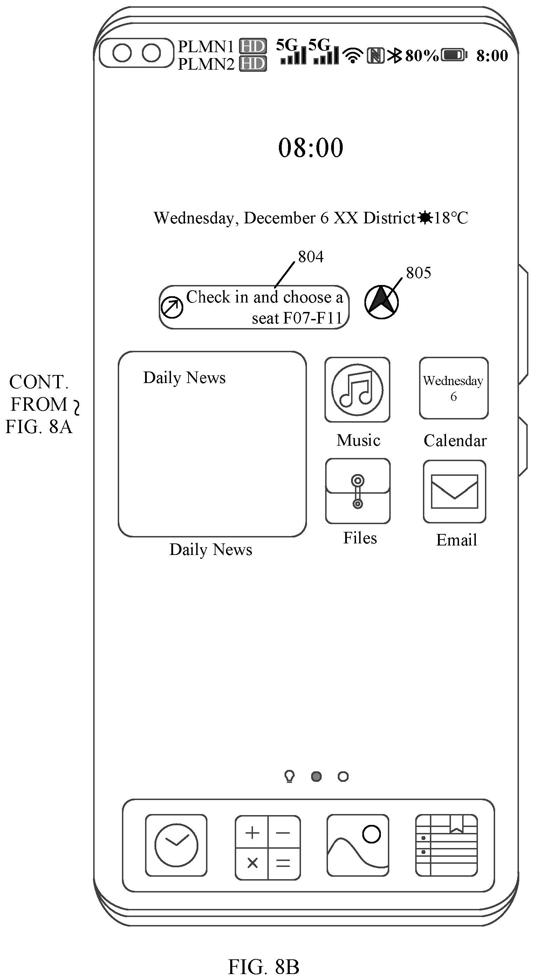

It can be understood that FIG. 5A to FIG. 7C may show display manners in which the electronic device receives a card pushed by a single service, and FIG. 8A and FIG. 8B may show a display manner in which the electronic device receives cards pushed by two services.

In a possible implementation, upon receiving cards pushed by two services, the electronic device may display the two cards simultaneously in a form of a card suit with reference to the embodiment corresponding to FIG. 8A and FIG. 8B.

For example, FIG. 8A and FIG. 8B are a schematic diagram 4 of interfaces for display style switching according to an embodiment of this application.

When the electronic device receives cards pushed by two services and the two services meet associated services or parallel services, the electronic device may display both cards in a card set. An interface shown in FIG. 8A may include a card 801 and a card 802. The card 801 may be a card pushed by a departure reminder service. The card 802 may be a card pushed by a flight travel service.

In response to an operation performed by a user to collapse a card set, the electronic device may display an interface shown in FIG. 8B. The interface may include a capsule button 804 and a ball button 805. The electronic device may determine, based on a priority of a service and a relationship between the two services (for example, associated services or parallel services), content to be displayed in the capsule button 804 and the ball button 805.

In one implementation, when a priority of the departure reminder service is lower than a priority of the flight travel service, the electronic device may display the card corresponding to the flight travel service in the capsule button 804.

In another implementation, when a priority of the departure reminder service is the same as a priority of the flight travel service, the electronic device may display a card on a left side of the card set in the capsule button 804, and display a card on a right side of the card set in the ball button 805. This is not limited in this embodiment of this application.

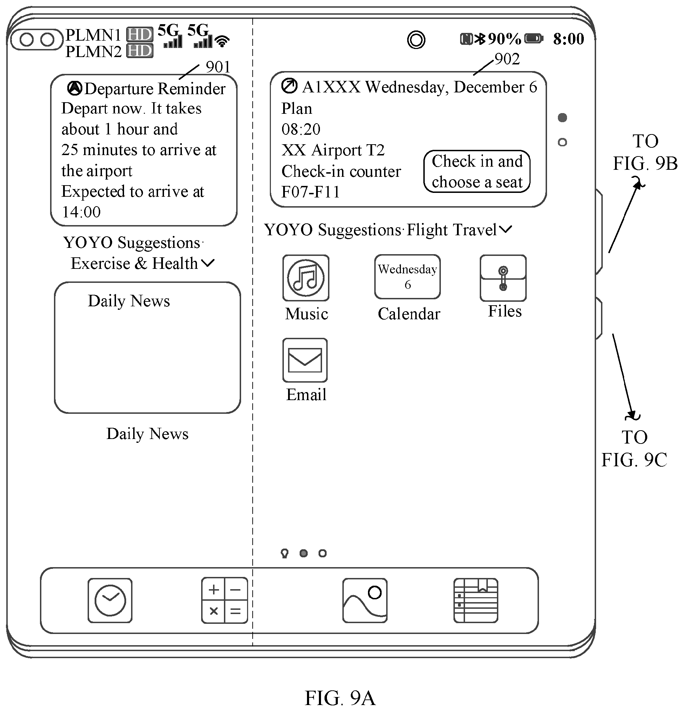

For meanings of the associated services and the parallel services, refer to a description of FIG. 9A to FIG. 9C. Details are not described herein again.

It can be understood that, in response to a trigger operation of a user for the capsule button 804, the electronic device may display a flight travel card in the card set shown in FIG. 8A. Alternatively, in response to a trigger operation of a user for the ball button 805, the electronic device may display a departure reminder card in the card set shown in FIG. 8A.

Based on this, when the electronic device simultaneously pushes two services, the electronic device may display a capsule style corresponding to a card on an interface in response to an operation performed by a user to collapse a card set.

It can be understood that FIG. 3A to FIG. 8B above may be illustrations in a case that the electronic device is a mobile phone. When the electronic device is a large-screen device, the electronic device may perform card style switching based on an embodiment corresponding to FIG. 9A to FIG. 9C below. The large-screen device may be a tablet, a foldable-screen mobile phone, or the like.

FIG. 9A to FIG. 9C are a schematic diagram 5 of interfaces for display style switching according to an embodiment of this application. In the embodiment corresponding to FIG. 9A to FIG. 9C, a foldable-screen mobile phone is used as an example of the electronic device for illustrative description. This illustration does not constitute a limitation on this embodiment of this application.

As illustrated on an interface shown in FIG. 9A, the foldable-screen mobile phone may support simultaneous display of two YOYO Suggestions card sets, namely, a card set 901 and a card set 902. The card set 901 may display a departure reminder card, and the card set 902 may display a flight travel card.

Generally, an area occupied by the card set 902 is greater than an area occupied by the card set 901. Therefore, when receiving a card pushed by one service, the electronic device may display the pushed card in the card set 902. The card set 902 may serve as a primary card set, and the card set 901 may serve as a secondary card set. The primary card set may be used to display a card pushed by a service with a higher priority and the like. This is not limited in this embodiment of this application.

When the electronic device receives cards pushed by two services and the two services meet associated services or parallel services, the electronic device may determine, based on priorities of the services, a card to be displayed in the card set 901 and a card to be displayed in the card set 902, respectively.

The associated services or the parallel services may be preset by the electronic device.

The associated services may be at least two services that are simultaneously pushed by the electronic device and that have an association relationship. The associated services may include an important service and a non-important service. A non-associated service is generated based on the important service. Generally, a priority of the important service is higher than a priority of the non-important service. For example, when the electronic device detects flight information, a flight travel service may push a flight travel card, the electronic device may further obtain a departure reminder service associated with the flight travel service, and the departure reminder service pushes a departure reminder card, so that a user can learn a distance from a current location to an airport. The important service may be the flight travel service, and the non-important service may be the departure reminder card.

In this scenario, the electronic device may display the flight travel card in the card set 902, and display the departure reminder card in the card set 901, as illustrated on the interface shown in FIG. 9A.

It can be understood that when the electronic device detects two services and the two services meet the associated services, the electronic device may determine a card display position based on priorities of the services.

The parallel services may be at least two services that are simultaneously pushed by the electronic device. For example, when the electronic device simultaneously detects that a schedule needs to be pushed and a YOYO Suggestions description needs to be pushed, the electronic device may display the Today's Schedule card (or the YOYO Suggestions description card) in the card set 901, and display the YOYO Suggestions description card (or the Today's Schedule card) in the card set 902. This is not shown in FIG. 9A to FIG. 9C.

It can be understood that when the electronic device detects two services and the two services meet parallel services, the electronic device may display the two parallel services in two card sets, respectively.

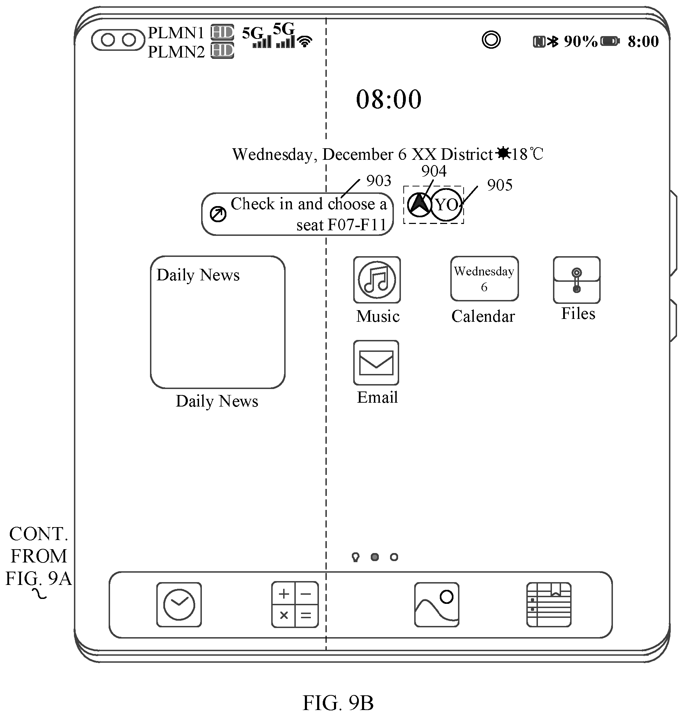

When the electronic device displays the interface shown in FIG. 9A to FIG. 9C, the electronic device displays an interface shown in FIG. 9B in response to an operation performed by a user to collapse the card set 901 or the card set 902. The interface shown in FIG. 9B may include a capsule button 903, a ball 904, and a ball 905. The ball 904 and the ball 905 may jointly serve as a button that can be triggered. The button that can be triggered is located inside a dashed-line box.

The capsule button 903 may correspond to a flight travel service in the card set 902, the ball 904 may correspond to a departure reminder service in the card set 901, and the ball 905 may correspond to a YOYO Suggestions description service in the card set 902. The YOYO Suggestions description service may be covered with the flight travel service, and therefore cannot be directly displayed on the interface shown in FIG. 9A.

It can be understood that when the electronic device displays two card sets, the electronic device may collapse the two card sets into one in response to an operation performed by a user to collapse any card set.

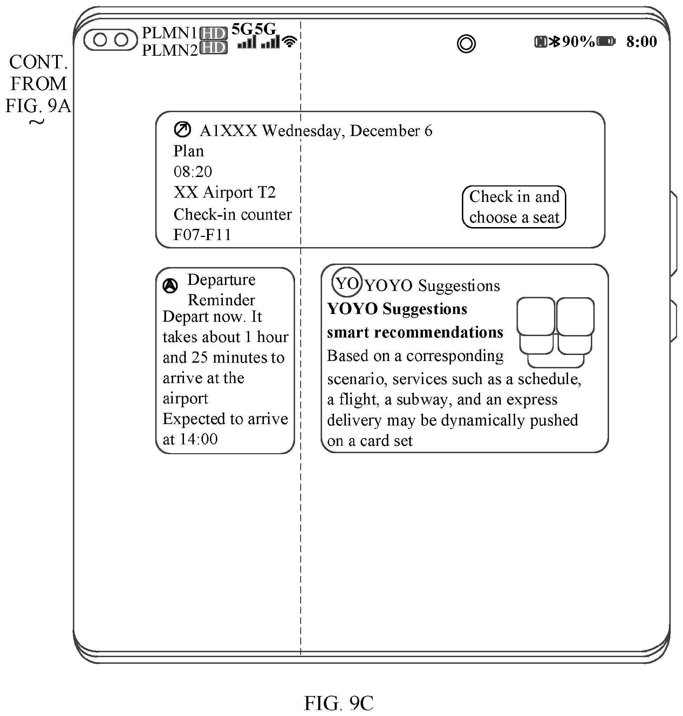

When the electronic device displays the interface shown in FIG. 9A, the electronic device displays an interface shown in FIG. 9C in response to a long slide operation performed by a user to collapse the card set 901 or the card set 902. The interface shown in FIG. 9C may display all cards in a card set, that is, display the departure reminder card, the flight travel card, and the YOYO Suggestions description card.

It can be understood that the electronic device may provide a manner of viewing all cards to improve user experience of using a card set.

Based on the descriptions of FIG. 3A to FIG. 9C above, after a user deletes all cards in a card set, the electronic device cannot display any capsule.

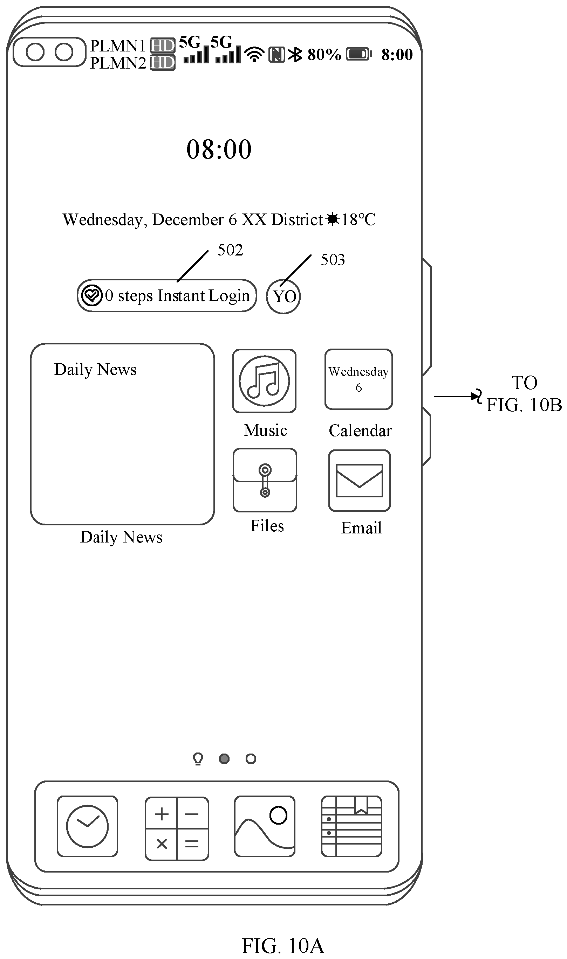

For example, FIG. 10A to FIG. 10C are a schematic diagram 6 of interfaces for display style switching according to an embodiment of this application. In the embodiment corresponding to FIG. 10A to FIG. 10C, an example in which a preset card is the YOYO Suggestions description card is used for illustrative description. This illustration does not constitute a limitation on this embodiment of this application.

The electronic device displays an interface shown in FIG. 10A. The interface may include the capsule button 502 and the ball button 503. Content displayed on the interface may be the same as that on the interface shown in FIG. 5B. Details are not described herein again.

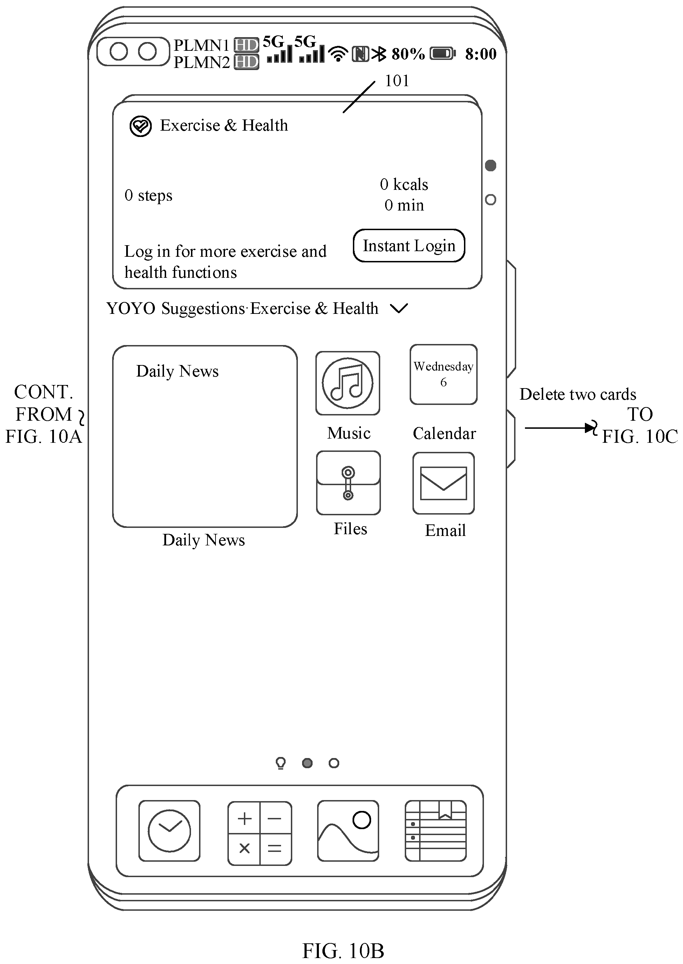

In response to a trigger operation of a user for the capsule button 502, the electronic device displays an interface shown in FIG. 10B. The interface may include the card set 101. Content displayed on the interface may be similar to that on the interface shown in FIG. 5A. Details are not described herein again.

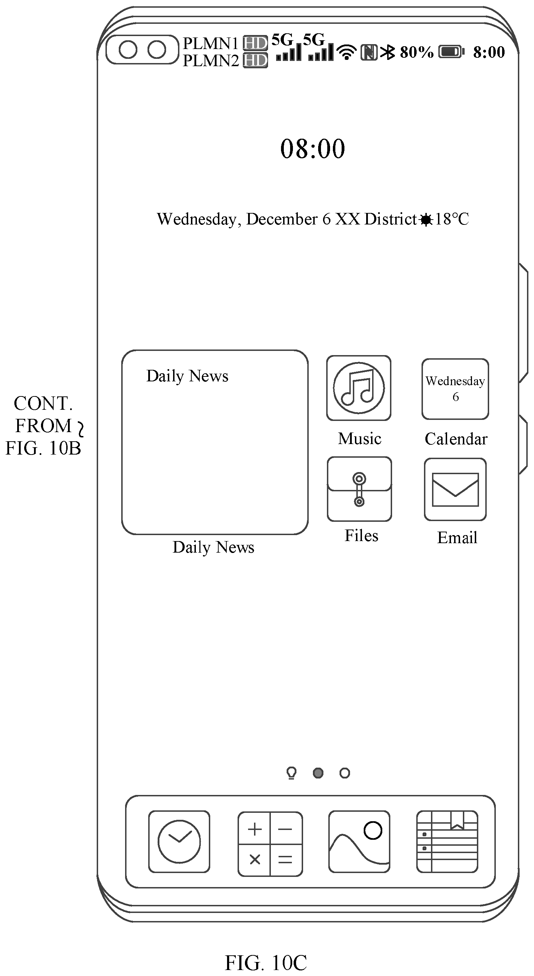

In response to deletion of the Exercise & Health card and the YOYO Suggestions description card from the card set 101 by a user, the electronic device may jump to an interface shown in FIG. 10C. The interface shown in FIG. 10C may not display any capsule button. It can be understood that a capsule button may be in a correspondence with a card in a card set. When no card exists in a card set, the electronic device cannot collapse the card set to display the capsule button, so as to maintain consistency between the card set and the button.

In a possible implementation, the electronic device may also provide a fallback strategy. To be specific, after a user deletes all cards from a card set, the electronic device may display a preset capsule button. In this scenario, even if the user deletes all the cards from the card set, the electronic device may retain a capsule button corresponding to the preset card, so as to ensure function availability.

In a possible implementation, when the electronic device deletes an exercise and health application, the electronic device may prompt a user to restore the exercise and health application in response to an operation performed by the user to select the style of Climate Clock + Exercise & Health.

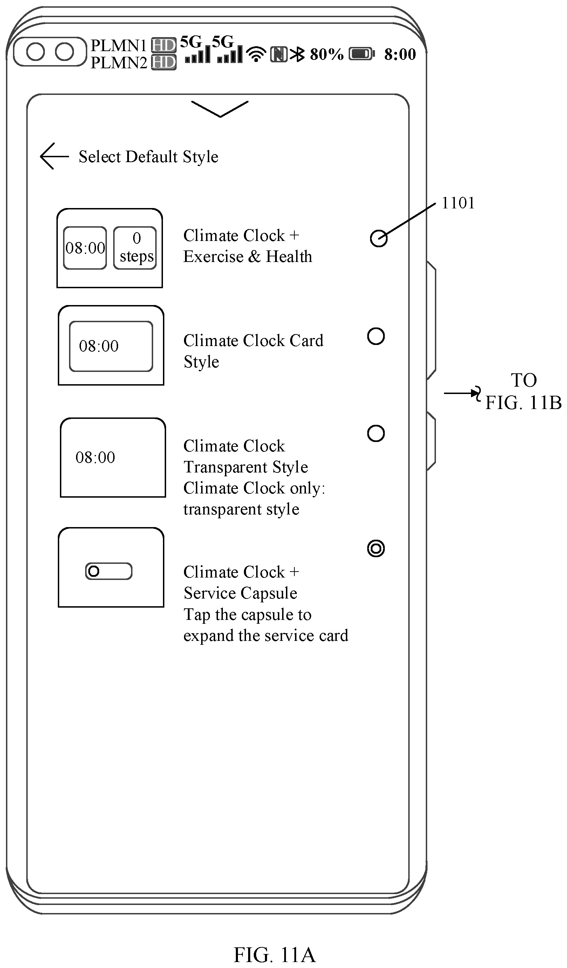

For example, FIG. 11A to FIG. 11D are a schematic diagram of interfaces for restoring an application according to an embodiment of this application.

The electronic device displays an interface shown in FIG. 11A. The interface may include a button 1101. The button 1101 is used to display the Climate Clock card and the Exercise & Health card by default at a position at which the card set 101 is located. Content displayed on the interface may be similar to that on the interface shown in FIG. 3C. Details are not described herein again.

It can be learned from the interface shown in FIG. 11A that a current card may be in the style of Climate Clock + a service capsule.

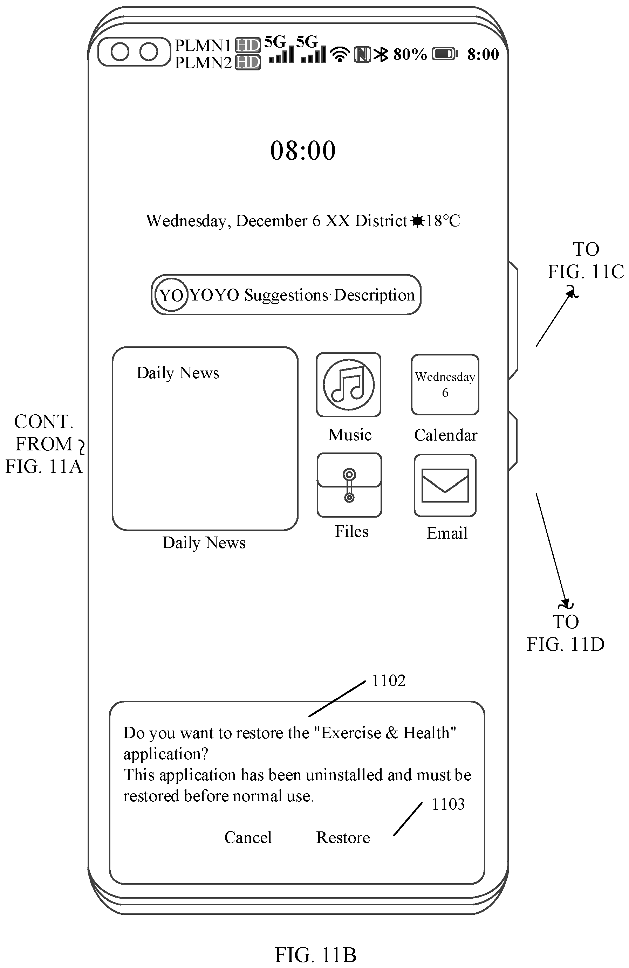

When the exercise and health application no longer exists in the electronic device, in response to a trigger operation of a user for the button 1101, the electronic device displays an interface shown in FIG. 11B. The interface may include a window 1102. The window 1102 may include prompt information used to indicate whether to restore the exercise and health application, a Cancel button, and a Restore button 1103.

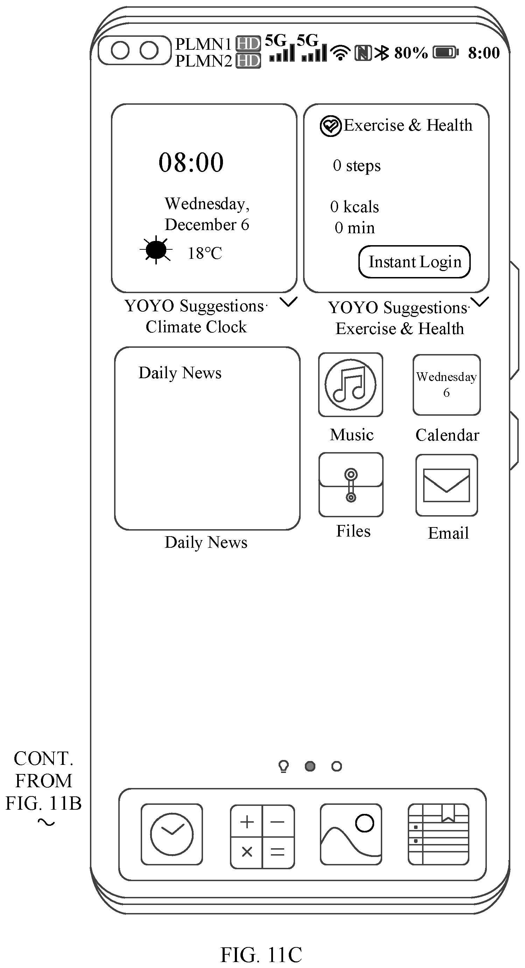

In response to a trigger operation for the Restore button 1103, after the electronic device restores the exercise and health application, the electronic device may display an interface shown in FIG. 11C. The interface may simultaneously display the Climate Clock card and the Exercise & Health card.

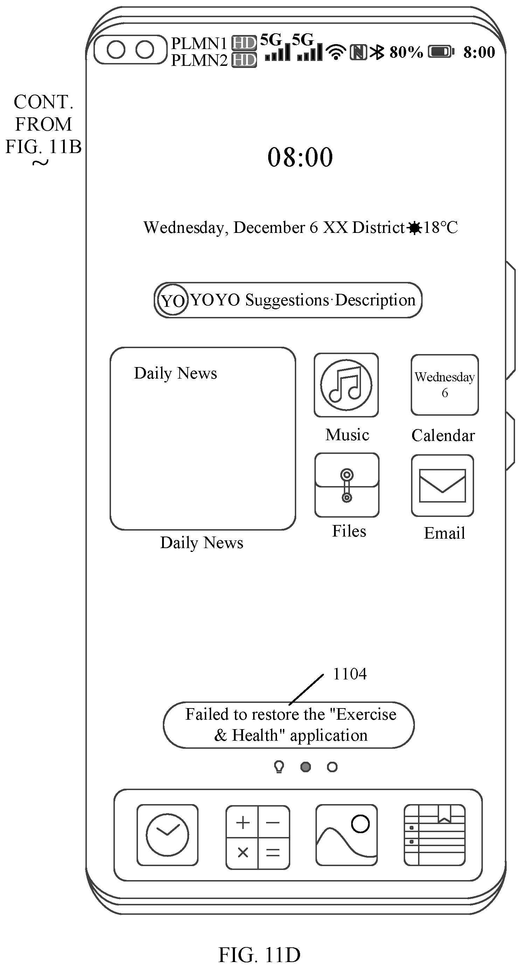

In response to a trigger operation for the Restore button 1103, if the electronic device fails to restore the exercise and health application, the electronic device may display an interface shown in FIG. 11D. The interface may display prompt information 1104. The prompt information 1104 is used to indicate that the exercise and health application fails to be restored. In this scenario, the electronic device cannot switch to the style of Climate Clock + Exercise & Health.

Based on this, the electronic device may prompt a user upon an application download failure, so that the user can provide another download method in time.

Based on the descriptions of FIG. 3A to FIG. 11D, the electronic device may contain a card on the home screen in a smaller UI element (for example, a capsule button or a ball button). When a card is pushed, the electronic device may feed back delivered service information by using a dynamic change of the smaller UI element. This reduces impact of stacking large service cards on the home screen on overall home screen aesthetics.

In a possible implementation, the display method depicted in FIG. 5A to FIG. 11D may be applied not only to a card set on the home screen, but also to a card set on the leftmost home screen, a card set on the lock screen interface or another interface, or the like. This is not limited in this embodiment of this application.

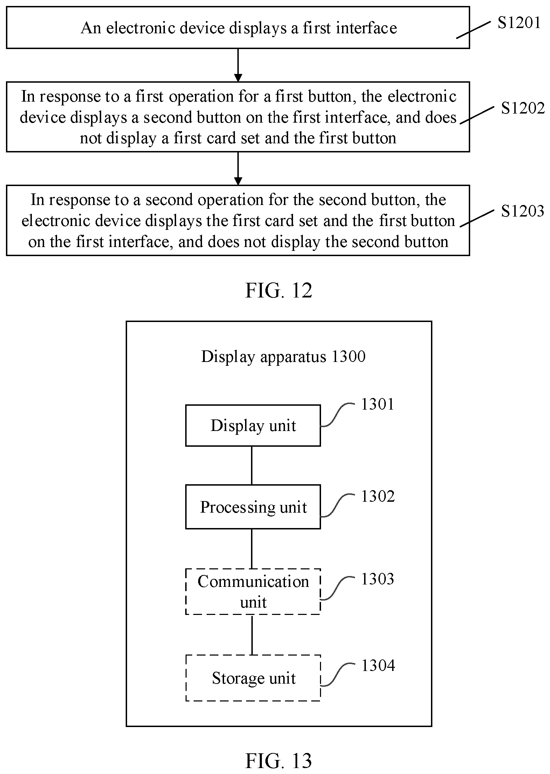

With reference to the descriptions of FIG. 3A to FIG. 11D above, FIG. 12 is a schematic diagram of steps of a display method according to an embodiment of this application. The display method may include the following steps:
S1201: The electronic device displays a first interface.

The first interface includes a first card set and a first button, the first card set includes N cards, a card displayed at an uppermost layer of the N cards is a first card, and N is an integer greater than 0.

The first interface may be the interface shown in FIG. 5A, the first button may be the first target button depicted in FIG. 5A to FIG. 5E, and the first card may be the card 102.

S1202: In response to a first operation for the first button, the electronic device displays a second button on the first interface, and does not display the first card set and the first button.

A display region occupied by the second button is smaller than a display region occupied by the first card set.

The first operation may be a trigger operation for the first target button. For a meaning of the first target button, refer to the description of FIG. 5A to FIG. 5E.

As illustrated on the interface shown in FIG. 5B, the second button may be the capsule button 502.

S1203: In response to a second operation for the second button, the electronic device displays the first card set and the first button on the first interface, and does not display the second button.

The second operation may be a trigger operation for the capsule button 502.

It can be understood that, an electronic device may collapse the first card set into the second button based on the first operation. Because the display region occupied by the second button is smaller than the display region occupied by the first card set, an effect of reducing display region occupation on the home screen is implemented by collapsing the card set.

Further, the electronic device may also expand the second button into the first card set based on the second operation, so that a user can flexibly view card content by means of simple triggering.

In a possible implementation, a card, of the N cards, at a lower layer of the first card is a second card, and the displaying a second button on the first interface includes: displaying the second button and a third button on the first interface.

The second button includes an identifier of the first card, the third button includes an identifier of the second card, and a display region occupied by the third button is smaller than the display region occupied by the second button.

The second card may be the card 104. As illustrated on the interface shown in FIG. 5B, the third button may be the ball button 503.

When a card set includes two cards, the electronic device may collapse the two cards into two buttons: a large button and a small button, so as to reduce display space occupation on the home screen.

In a possible implementation, the method further includes: in response to a third operation for the third button, displaying the first button on the first interface, and displaying the second card in the first card set; and in response to a fourth operation for the first button, displaying the second button and the third button on the first interface, and not displaying the first card set and the first button.

The third operation may be a trigger operation for the ball button 503. After the response to the third operation for the third button, the electronic device displays the interface shown in FIG. 5C, and expands the card 104.

The fourth operation for the first button may be understood as an operation of collapsing a card set (or collapsing the card 104).

Based on this, the electronic device not only can collapse a card set into a button, but also can display a corresponding card in the card set based on an operation performed by a user to expand the button, so that the user can conveniently view card content at any time.

In a possible implementation, the method further includes: in response to a fifth operation for the third button, displaying the first button on the first interface, and displaying the second card in the first card set; in response to an operation for the second card, displaying the first interface; in response to a sixth operation for the first card set, displaying the first button on the first interface, and displaying the second card in the first card set; and in response to a seventh operation for the first button, displaying a fourth button and a fifth button on the first interface, where a display region occupied by the fifth button is smaller than a display region occupied by the fourth button, the display region occupied by the fourth button is smaller than the display region occupied by the first card set, the fourth button includes the identifier of the second card, and the fifth button includes the identifier of the first card.

The fifth operation may be a trigger operation for the ball button 503. The operation for the second card may be understood as an operation performed by a user to slide the second card. In this case, the first card may be displayed in the first card set. The sixth operation for the first card set may be understood as an operation of sliding the first card set. In this case, the second card may be displayed in the first card set again. The seventh operation for the first button may be understood as an operation of collapsing the first card set.

The fourth button may be the capsule button 505, and the fifth button may be the ball button 506.

Based on this, when a user views a card 104 and, by means of a trigger operation for the card set, views the card 104 again, the electronic device may display a capsule corresponding to the card 104 upon collapsing the card set. In this way, the electronic device can identify a card that a user switches back and forth or views a plurality of times as a relatively important card, and collapse the card into a capsule.

In a possible implementation, the first card is a card pushed by a first service, the second card is a card pushed by a second service, and the displaying the second button and a third button on the first interface includes: displaying the second button and the third button on the first interface when a priority of the first service is higher than a priority of the second service.

The first service may be the Exercise & Health service, and the second service may be YOYO Suggestions.

The electronic device may determine, based on a priority of a service (or a priority of a card), content to be displayed in a button. For example, a service card with a high priority is displayed in a button that occupies a large display region, and a service card with a low priority is displayed in a button that occupies a small display region.

In a possible implementation, the displaying a second button on the first interface includes: displaying the second button and first information on the first interface, where the first information includes one or more of the following: weather information, time information, or regional information.

The electronic device may also display the first information while displaying the button, so that a user can view more other information while collapsing the card set.

In a possible implementation, after the displaying a first interface, the method further includes: in response to an eighth operation for the first card set; displaying a first window on the first interface, where the first window includes a sixth button for setting a display style; and in response to an operation for the sixth button, displaying a second window on the first interface, where the second window includes a seventh button for setting a first display style, and the first display style is a style of Climate Clock + a service capsule; and the displaying the second button and first information on the first interface includes: displaying the second button and the first information on the first interface when the seventh button is selected.

The eighth operation for the first card set may be an operation for the card set 101. As illustrated on the interface shown in FIG. 3B, the first window may be the window 303, and the sixth button may be the button 304. As illustrated on the interface shown in FIG. 3C, the second window may be the window 305, and the seventh button may be the button 306.

Based on this, the electronic device can support setting of the first display style and switching between the first display style and a card style, so that a user conveniently selects a proper display style as required.

In a possible implementation, the method further includes: in response to a received third card, displaying the first button on the first interface, and displaying the third card in the first card set; in response to a ninth operation for the first button, displaying an eighth button and a ninth button on the first interface, and not displaying the first card set and the first button, where the eighth button includes an identifier of the third card, the ninth button includes the identifier of the first card and the identifier of the second card, a display region occupied by the eighth button is smaller than the display region occupied by the first card set, and the display region occupied by the eighth button is larger than a display region occupied by the ninth button; and in response to an operation for the ninth button, displaying the first card or the second card in the first card set.

The third card may be the Today's Schedule card depicted in FIG. 6A to FIG. 6D. The ninth operation for the first button may be understood as an operation of collapsing a card set.

As illustrated on an interface shown in FIG. 6B, the eighth button may be a button 604, and the ninth button may be a button (or referred to as a small button) formed by a ball 605 and a ball 606.

Based on this, when a card set includes three cards, the electronic device may collapse the three cards into two buttons: a large button and a small button, and the small button may include identifiers of two cards, so as to reduce display space occupation on the home screen.

In a possible implementation, after the response to the received third card, the method further includes: in response to a received fourth card, displaying the first button on the first interface, and displaying the fourth card in the first card set; in response to a tenth operation for the first button, displaying a tenth button and an eleventh button on the first interface, and not displaying the first card set and the first button, where the tenth button includes an identifier of the fourth card, the eleventh button displays a first identifier and a second identifier, the second identifier includes two of the identifier of the first card, the identifier of the second card, and the identifier of the third card, a display region occupied by the tenth button is smaller than the display region occupied by the first card set, and a display region occupied by the eleventh button is smaller than the display region occupied by the tenth button; and in response to an operation for the eleventh button, displaying the first card, the second card, or the third card in the first card set.

The fourth card may be the flight travel card depicted in FIG. 7A to FIG. 7C. The tenth operation for the first button may be understood as an operation of collapsing a card set.

As illustrated on the interface shown in FIG. 7B, the tenth button may be the button 702, and the eleventh button may be a button (or referred to as a small button) formed by the ball 703, the ball 704, and the ball 705.

The first identifier may be the ellipsis-dots identifier in the ball 705, and the second identifier may include the description in the ball 703 and the identifier in the ball 704.

Based on this, when a card set includes four cards, the electronic device may collapse the four cards into two buttons: a large button and a small button, and the small button may include identifiers of two cards and one ellipsis-dots identifier, so as to reduce display space occupation on the home screen.

In a possible implementation, the first identifier is used to indicate that the electronic device receives at least M cards, and M is greater than or equal to 4.

In a possible implementation, the method further includes: in response to a fifth card and a sixth card that are simultaneously received, displaying the first button on the first interface, and simultaneously displaying the fifth card and the sixth card in the first card set; and in response to an eleventh operation for the first button, displaying a twelfth button and a thirteenth button on the first interface, and not displaying the first card set and the first button, where a display region occupied by the twelfth button is smaller than the display region occupied by the first card set, the display region occupied by the twelfth button is larger than a display region occupied by the thirteenth button, the twelfth button includes an identifier of the fifth card, and the thirteenth button includes an identifier of the sixth card.

The fifth card may be the flight travel card depicted in FIG. 8A and FIG. 8B, and the sixth card may be the departure reminder card depicted in FIG. 8A and FIG. 8B. The eleventh operation for the first button may be understood as an operation of collapsing a card set.

As illustrated on the interface shown in FIG. 8B, the twelfth button may be the button 804, and the thirteenth button may be the button 805.

Based on this, when the electronic device simultaneously pushes two cards, the electronic device may also collapse the two cards, so as to save home screen space.

In a possible implementation, the fifth card is a card pushed by a third service, the sixth card is a card pushed by a fourth service, and the displaying a twelfth button and a thirteenth button on the first interface includes: displaying the twelfth button and the thirteenth button on the first interface when a priority of the third service is higher than a priority of the fourth service.

When the electronic device simultaneously receives two cards, the electronic device may also determine, based on a priority upon collapsing the cards, content to be displayed in a collapsed button. For example, content of a card with a higher priority is displayed in a large button, so that a user can conveniently view the content at any time.

In a possible implementation, the method further includes: in response to a twelfth operation for the first card set, displaying a second interface, where the second interface includes the first card and the second card.

The twelfth operation for the first card set may be understood as a long slide operation for the first card set. The long slide operation may be understood as an operation with a slide distance greater than a distance threshold.

The second interface may be the interface shown in FIG. 7C or the interface shown in FIG. 9C.

Based on this, due to a size limitation of the electronic device, the electronic device may display all cards in a card set on the second interface after receiving a long slide operation of a user, thereby improving efficiency of viewing the cards by the user.

In a possible implementation, after the displaying a first interface, the method further includes: when duration of displaying a third interface reaches a first time threshold, displaying the second button on the first interface, and not displaying the first card set and the first button, where the third interface is an interface different from the first interface.

The first time threshold may be a value such as 15 seconds.

Based on this, the electronic device may switch from the card style to the capsule style after exiting, for duration of 15 seconds or the like, a screen on which a card set is located. This prevents the card set from occupying a display region for a long time.

In a possible implementation, after the displaying a second button on the first interface, the method further includes: in response to an operation of deleting the first card in the first card set, not displaying the second button.

Based on this, the electronic device may cancel display of a button after all cards in a card set are deleted, so as to maintain consistency between the card set and the button.

In a possible implementation, the first interface further includes a second card set, and the method further includes: in response to a fifth card and a sixth card that are simultaneously received, displaying a fourteenth button and a fifteenth button on the first interface, displaying the fifth card in the first card set, and displaying the sixth card in the second card set, where the display region occupied by the first card set is larger than a display region occupied by the second card set; and in response to an operation for the fourteenth button or the fifteenth button, displaying a sixteenth button and a seventeenth button on the first interface, and not displaying the first card set, the second card set, the fourteenth button, and the fifteenth button, where a display region occupied by the sixteenth button is smaller than the display region occupied by the first card set, the display region occupied by the sixteenth button is larger than a display region occupied by the seventeenth button, the sixteenth button includes an identifier of the fifth card, and the seventeenth button includes an identifier of the sixth card.

As shown in FIG. 9A, the first card set may alternatively be the card set 902, the second card set may be the card set 901, the fifth card may be a card displayed in the card set 902, and the sixth card may be a card displayed in the card set 901.

The fourteenth button may be a button used to collapse the first card set, and the fifteenth button may be a button used to collapse the second card set. The sixteenth button may be the button 903, and the seventeenth button may be a button formed in a region in which the ball 904 is located.

When the electronic device includes a plurality of card sets, the electronic device may also collapse two card sets into buttons based on an operation for any card, and display an identifier of a larger card set in a button that occupies a larger display region, so that a user can conveniently view a card status at any time.

It should be noted that all module names involved in embodiments of this application may be defined as other names, provided that functions of the modules can be implemented. The module names are not specifically limited.

It should be noted that user information (including but not limited to user equipment information, personal information of a user, and the like) and data (including but not limited to data used for analysis, stored data, presented data, and the like) involved in the embodiments of this application are all information and data that are authorized by the user or that are fully authorized by each party. In addition, collection, use, and processing of the related data need to comply with relevant laws, regulations, and standards of relevant countries and regions, and a corresponding operation entry is provided for the user to choose to authorize or reject.

The display method in the embodiments of this application is described above. An apparatus for performing the method provided in the embodiments of this application is described below. A person skilled in the art can understand that the method and the apparatus may be combined and mutual reference may be made, and that a related apparatus provided in an embodiment of this application may perform the steps in the foregoing list ranking method.

As shown in FIG. 13, FIG. 13 is a schematic diagram of a structure of a display apparatus according to an embodiment of this application. The display apparatus may be an electronic device in the embodiments of this application or may be a chip or a chip system in the electronic device.

As shown in FIG. 13, a display apparatus 1300 may be applied to a communication device, a circuit, a hardware component, or a chip, and the display apparatus 1300 includes a display unit 1301 and a processing unit 1302. The display unit 1301 is configured to support a display step performed in the display method. The processing unit 1302 is configured to support an information processing step performed by the display apparatus 1300.

In a possible implementation, the display apparatus 1300 may further include a communication unit 1303, and the communication unit 1303 is configured to support the display apparatus 1300 in performing steps such as receiving or sending a message.

The display apparatus described in the embodiments of this application may all include the units described in the embodiment corresponding to FIG. 13.

Specifically, the processing unit 1302 may be integrated with the display unit 1301, and communication may occur between the processing unit 1302 and the display unit 1301.

In a possible implementation, the display apparatus 1300 may further include a storage unit 1304. The storage unit 1304 may include one or more memories, and the memory may be a device configured to store a program or data in one or more devices or circuits.

The storage unit 1304 may exist independently, and is connected to the processing unit 1302 by using a communication bus. Alternatively, the storage unit 1304 may be integrated with the processing unit 1302.

For example, the display apparatus 1300 may be the chip or the chip system of the electronic device in the embodiments of this application. The storage unit 1304 may store computer-executable instructions of the method for the electronic device, so that the processing unit 1302 performs the method for the electronic device in the foregoing embodiments. The storage unit 1304 may be a register, a cache, a random access memory (random access memory, RAM), or the like, and the storage unit 1304 may be integrated with the processing unit 1302. The storage unit 1304 may be a read-only memory (read-only memory, ROM) or another type of static storage device that may store static information and instructions. The storage unit 1304 may be independent of the processing unit 1302.

In a possible implementation, the display apparatus 1300 may further include a communication unit 1303. The communication unit 1303 is configured to support the display apparatus 1300 in interacting with another device. For example, when the display apparatus 1300 is an electronic device, the communication unit 1303 may be a communication interface or an interface circuit. When the display apparatus 1300 is the chip or the chip system in the electronic device, the communication unit 1303 may be a communication interface. For example, the communication interface may be an input/output interface, a pin, a circuit, or the like.

The apparatus in this embodiment may correspondingly be configured to perform the steps performed in the foregoing method embodiments. Implementation principles and technical effects of the apparatus and the foregoing method embodiments are similar and are not described herein again.

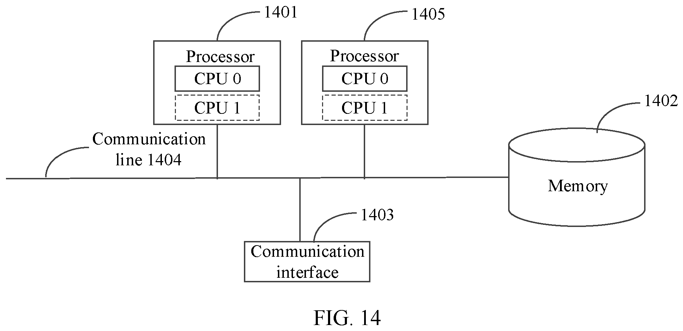

FIG. 14 is a schematic diagram of a hardware structure of another electronic device according to an embodiment of this application.

The electronic device may include a processor 1401, a communication line 1404, and at least one communication interface (for example, a description is provided by using a communication interface 1403 as an example in FIG. 14).

The processor 1401 may be a general-purpose central processing unit (central processing unit, CPU), a microprocessor, an application-specific integrated circuit (application-specific integrated circuit, ASIC), or one or more integrated circuits for controlling program execution in the solutions in this application.

The communication line 1404 may include a circuit for transmitting information between the foregoing components.

The communication interface 1403 uses any apparatus such as a transceiver to communicate with another device or a communication network, such as an Ethernet or a wireless local area network (wireless local area networks, WLAN).

Possibly, the electronic device may further include a memory 1402.

The memory 1402 may be a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer, but is not limited thereto. The memory may exist independently, and is connected to the processor by using the communication line 1404. The memory may alternatively be integrated with the processor.

The memory 1402 is configured to store computer-executable instructions for executing the solutions in this application, and the processor 1401 controls the execution. The processor 1401 is configured to execute the computer-executable instructions stored in the memory 1402, to implement the method provided in the embodiments of this application.

Possibly, the computer-executable instructions in this embodiment of this application may also be referred to as application program code. This is not specifically limited in this embodiment of this application.

During specific implementation, in an embodiment, the processor 1401 may include one or more CPUs, for example, a CPU 0 and a CPU 1 in FIG. 14.

During specific implementation, in an embodiment, the electronic device may include a plurality of processors, for example, the processor 1401 and a processor 1405 in FIG. 14. Each of these processors may be a single-core (single-CPU) processor or a multi-core (multi-CPU) processor. The processor herein may be one or more devices, circuits, and/or processing cores configured to process data (for example, computer program instructions).

In the foregoing embodiments, instructions stored in the memory for execution by the processor may be implemented in a form of a computer program product. The computer program product may be written into the memory in advance, or may be downloaded and installed in the memory in a form of software.

The display method provided in the embodiments of this application may be applied to an electronic device having a communication function. The electronic device includes a terminal device. For a specific device form and the like of the terminal device, refer to the foregoing related description. Details are not described herein again.

An embodiment of this application provides a terminal device, and the terminal device includes a processor and a memory. The memory stores computer executable instructions. The processor executes the computer execution instructions stored in the memory, so that the terminal device performs the foregoing method.

An embodiment of this application provides a chip. The chip includes a processor, and the processor is configured to invoke a computer program in a memory to execute the technical solutions in the foregoing embodiments. Implementation principles and technical effects of the chip are similar to those of the related embodiments, and details are not described herein again.

An embodiment of this application further provides a computer-readable storage medium. The computer-readable storage medium stores a computer program. The foregoing method is implemented when the computer program is executed by a processor. All or some of the methods described in the foregoing embodiments may be implemented by using software, hardware, firmware, or any combination thereof. If implemented in software, functions may be stored in a computer-readable medium or transmitted on a computer-readable medium as one or more instructions or code. The computer-readable medium may include a computer storage medium and a communication medium, and may further include any medium that enables a computer program to be transmitted from a place to another place. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is to carry or store required program code in a form of an instruction or a data structure, and may be accessed by a computer. In addition, any connection is appropriately referred to as a computer-readable medium. For example, if software is transmitted from a website, a server, or another remote source by using a coaxial cable, an optical fiber cable, a twisted pair, a digital subscriber line (Digital Subscriber Line, DSL), or wireless technologies (such as infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc, a laser disc, an optical disc, a digital versatile disc (Digital Versatile Disc, DVD), a floppy disk, and a Blu-ray disc, and the magnetic disk usually reproduces data magnetically, while the optical disc reproduces data optically by using a laser. The foregoing combinations should also be included in the scope of the computer-readable medium.

An embodiment of this application provides a computer program product. The computer program product includes a computer program, and when the computer program is run, a computer is enabled to perform the foregoing method.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of flows and/or blocks in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more flows in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions in the present invention shall fall within the protection scope of the present invention.

## Claims

1. A display method, comprising:
displaying a first interface, wherein the first interface comprises a first card set and a first button, the first card set comprises N cards, a card displayed at an uppermost layer of the N cards is a first card, and N is an integer greater than 0;
in response to a first operation for the first button, displaying a second button on the first interface, and not displaying the first card set and the first button, wherein a display region occupied by the second button is smaller than a display region occupied by the first card set; and
in response to a second operation for the second button, displaying the first card set and the first button on the first interface, and not displaying the second button.

2. The method according to claim 1, wherein a card, of the N cards, at a lower layer of the first card is a second card, and the displaying a second button on the first interface comprises:
displaying the second button and a third button on the first interface, wherein the second button comprises an identifier of the first card, the third button comprises an identifier of the second card, and a display region occupied by the third button is smaller than the display region occupied by the second button.

3. The method according to claim 2, wherein the method further comprises:
in response to a third operation for the third button, displaying the first button on the first interface, and displaying the second card in the first card set; and
in response to a fourth operation for the first button, displaying the second button and the third button on the first interface, and not displaying the first card set and the first button.

4. The method according to claim 2, wherein the method further comprises:
in response to a fifth operation for the third button, displaying the first button on the first interface, and displaying the second card in the first card set;
in response to an operation for the second card, displaying the first interface;
in response to a sixth operation for the first card set, displaying the first button on the first interface, and displaying the second card in the first card set; and
in response to a seventh operation for the first button, displaying a fourth button and a fifth button on the first interface, wherein a display region occupied by the fifth button is smaller than a display region occupied by the fourth button, the display region occupied by the fourth button is smaller than the display region occupied by the first card set, the fourth button comprises the identifier of the second card, and the fifth button comprises the identifier of the first card.

5. The method according to any one of claims 2-4, wherein the first card is a card pushed by a first service, the second card is a card pushed by a second service, and the displaying the second button and a third button on the first interface comprises:
displaying the second button and the third button on the first interface when a priority of the first service is higher than a priority of the second service.

6. The method according to any one of claims 1-5, wherein the displaying a second button on the first interface comprises:
displaying the second button and first information on the first interface, wherein the first information comprises one or more of the following: weather information, time information, or regional information.

7. The method according to claim 6, wherein after the displaying a first interface, the method further comprises:
in response to an eighth operation for the first card set;
displaying a first window on the first interface, wherein the first window comprises a sixth button for setting a display style; and
in response to an operation for the sixth button, displaying a second window on the first interface, wherein the second window comprises a seventh button for setting a first display style, and the first display style is a style of Climate Clock + a service capsule; and
the displaying the second button and first information on the first interface comprises: displaying the second button and the first information on the first interface when the seventh button is selected.

8. The method according to any one of claims 2-5, wherein the method further comprises:
in response to a received third card, displaying the first button on the first interface, and displaying the third card in the first card set;
in response to a ninth operation for the first button, displaying an eighth button and a ninth button on the first interface, and not displaying the first card set and the first button, wherein the eighth button comprises an identifier of the third card, the ninth button comprises the identifier of the first card and the identifier of the second card, a display region occupied by the eighth button is smaller than the display region occupied by the first card set, and the display region occupied by the eighth button is larger than a display region occupied by the ninth button; and
in response to an operation for the ninth button, displaying the first card or the second card in the first card set.

9. The method according to claim 8, wherein after the response to the received third card, the method further comprises:
in response to a received fourth card, displaying the first button on the first interface, and displaying the fourth card in the first card set;
in response to a tenth operation for the first button, displaying a tenth button and an eleventh button on the first interface, and not displaying the first card set and the first button, wherein the tenth button comprises an identifier of the fourth card, the eleventh button displays a first identifier and a second identifier, the second identifier comprises two of the identifier of the first card, the identifier of the second card, and the identifier of the third card, a display region occupied by the tenth button is smaller than the display region occupied by the first card set, and a display region occupied by the eleventh button is smaller than the display region occupied by the tenth button; and
in response to an operation for the eleventh button, displaying the first card, the second card, or the third card in the first card set.

10. The method according to claim 9, wherein the first identifier is used to indicate that an electronic device receives at least M cards, and M is greater than or equal to 4.

11. The method according to any one of claims 1-10, wherein the method further comprises:
in response to a fifth card and a sixth card that are simultaneously received, displaying the first button on the first interface, and simultaneously displaying the fifth card and the sixth card in the first card set; and
in response to an eleventh operation for the first button, displaying a twelfth button and a thirteenth button on the first interface, and not displaying the first card set and the first button, wherein a display region occupied by the twelfth button is smaller than the display region occupied by the first card set, the display region occupied by the twelfth button is larger than a display region occupied by the thirteenth button, the twelfth button comprises an identifier of the fifth card, and the thirteenth button comprises an identifier of the sixth card.

12. The method according to claim 11, wherein the fifth card is a card pushed by a third service, the sixth card is a card pushed by a fourth service, and the displaying a twelfth button and a thirteenth button on the first interface comprises:
displaying the twelfth button and the thirteenth button on the first interface when a priority of the third service is higher than a priority of the fourth service.

13. The method according to any one of claims 1-10, wherein the first interface further comprises a second card set, and the method further comprises:
in response to a fifth card and a sixth card that are simultaneously received, displaying a fourteenth button and a fifteenth button on the first interface, displaying the fifth card in the first card set, and displaying the sixth card in the second card set, wherein the display region occupied by the first card set is larger than a display region occupied by the second card set; and
in response to an operation for the fourteenth button or the fifteenth button, displaying a sixteenth button and a seventeenth button on the first interface, and not displaying the first card set, the second card set, the fourteenth button, and the fifteenth button, wherein a display region occupied by the sixteenth button is smaller than the display region occupied by the first card set, the display region occupied by the sixteenth button is larger than a display region occupied by the seventeenth button, the sixteenth button comprises an identifier of the fifth card, and the seventeenth button comprises an identifier of the sixth card.

14. The method according to claim 2, 3, 4, 5, 8, 9, or 10, wherein the method further comprises:
in response to a twelfth operation for the first card set, displaying a second interface, wherein the second interface comprises the first card and the second card.

15. The method according to any one of claims 1-14, wherein after the displaying a first interface, the method further comprises:
when duration of displaying a third interface reaches a first time threshold, displaying the second button on the first interface, and not displaying the first card set and the first button, wherein the third interface is an interface different from the first interface.

16. The method according to any one of claims 1-15, wherein after the displaying a second button on the first interface, the method further comprises:
in response to an operation of deleting the first card in the first card set, not displaying the second button.

17. An electronic device, wherein the electronic device comprises one or more processors and a memory; and
the memory is coupled to the one or more processors, the memory is configured to store computer program code, the computer program code comprises computer instructions, and the one or more processors invoke the computer instructions to enable the electronic device to perform the method according to any one of claims 1 to 16.

18. A chip system, wherein the chip system is applied to an electronic device, the chip system comprises one or more processors, and the one or more processors are configured to invoke computer instructions to enable the electronic device to perform the method according to any one of claims 1 to 16.

19. A computer-readable storage medium, wherein the computer-readable storage medium comprises computer instructions, and when the computer instructions are run on an electronic device, the electronic device is enabled to perform the method according to any one of claims 1 to 16.

20. A computer program product, wherein the computer program product comprises computer program code, and when the computer program code is run on an electronic device, the electronic device is enabled to perform the method according to any one of claims 1 to 16.
